# FASCICULE DE BREVET EUROPEEN

(11) **EP 3 304 226 B1**
(45) Date de publication et mention de la délivrance du brevet: **19.02.2020**
(21) Numéro de dépôt: 16736027.0
(22) Date de dépôt: 30.06.2016
(51) Int. Cl.: G05B 19/05

(54) **PROCÉDÉ DE SURVEILLANCE ET D'EXPERTISE DU FONCTIONNEMENT D'UNE INSTALLATION INDUSTRIELLE PILOTÉE PAR UN CONTRÔLEUR PROGRAMMABLE ET ÉQUIPEMENT METTANT EN OEUVRE LEDIT PROCÉDÉ**
VERFAHREN ZUR ÜBERWACHUNG UND BEURTEILUNG DES BETRIEBS EINER INDUSTRIEANLAGE, DIE VON EINEM PROGRAMMIERBAREN STEUERGERÄT ANGESTEUERT WIRD, UND AUSRÜSTUNG ZUR IMPLEMENTIERUNG DES BESAGTEN VERFAHRENS
METHOD OF MONITORING AND ASSESSING THE OPERATION OF AN INDUSTRIAL INSTALLATION DRIVEN BY A PROGRAMMABLE CONTROLLER AND EQUIPMENT IMPLEMENTING SAID METHOD

(30) Priorité: 13.07.2015 FR 1556654
(43) Date de publication de la demande: 11.04.2018
(73) Titulaire: Tlogic Automation, 90000 Belfort (FR)
(72) Inventeur: THABUIS, Frédéric, 90000 Belfort (FR)
(74) Mandataire: Koelbel, Caroline
(86) Numéro de dépôt international: PCT/EP2016/065336
(87) Numéro de publication internationale: WO 2017/009057

(56) Documents cités:
- EP-A1- 0 436 019
- EP-A1- 2 434 357
- EP-A1- 2 672 348
- US-A- 5 774 377
- US-A1- 2003 014 387

## Description

### Domaine technique :

La présente invention concerne un procédé de surveillance et d'expertise d'une installation industrielle pilotée par un contrôleur programmable au moyen d'instructions programmées dans un programme utilisateur dudit contrôleur, ledit programme utilisateur comportant des variables internes utilisées pour coordonner l'exécution desdites instructions à chaque tour de cycle dudit contrôleur répété indéfiniment permettant le fonctionnement d'au moins une partie de ladite installation industrielle.

La présente invention concerne également un équipement de surveillance et d'expertise d'une installation industrielle pilotée par un contrôleur programmable mettant en œuvre le procédé défini ci-dessus.

### Technique antérieure :

Les installations industrielles, pouvant être utilisées dans tout type d'industries, sont majoritairement pilotées par un ou plusieurs contrôleurs programmables, appelés communément des automates programmables industriels (API) ou en anglais Programmable Logic Controller (PLC). Chaque contrôleur fonctionne au moyen d'instructions programmées dans un programme utilisateur ou code programme qui est développé spécifiquement pour chaque installation industrielle pilotée. Ainsi, l'écriture d'un programme utilisateur est complexe et unique. De ce fait, la mise au point de chaque programme utilisateur est fastidieuse, délicate et par conséquent coûteuse. Ceci est principalement lié aux contraintes de réalisation des programmes utilisateur et aux aléas de fonctionnement des programmes et/ou des installations, qui peuvent être très fréquents, et difficilement identifiables tant pendant la phase d'essais, que pendant la phase de mise en service du contrôleur programmable sur le site de production.

Afin de mieux comprendre les difficultés rencontrées et ainsi d'appréhender l'intérêt de l'invention proposée, les principes fondamentaux et les concepts majeurs d'une installation industrielle automatisée commandée par un ou plusieurs contrôleurs programmables sont rappelés ci-dessous.

Une installation industrielle automatisée est essentiellement constituée d'une partie commande et d'une partie opérative. La partie commande est l'unité de contrôle chargée de piloter les constituants physiques et les énergies qui assurent le fonctionnement de la partie opérative (machines de fabrication, lignes d'assemblages ou de montage, etc.). La partie commande représentant le cœur du système est généralement pilotée par un contrôleur de logique programmée ou contrôleur programmable. Il joue le rôle de « Chef d'orchestre » du système et sera nommé contrôleur dans la suite de la description. Il existe fréquemment des installations industrielles automatisées comportant plusieurs contrôleurs interconnectés, mais le principe de l'invention proposée est identique pour chacun d'entre eux. De nombreux équipements sont connectés à ce contrôleur et interagissent sur le fonctionnement de l'installation industrielle, tels que des :
- capteurs, composants de mesures, actionneurs, etc.
- pupitres de commande, lecteurs de codes à barres ou similaires, etc.
- robots, machines spéciales, visseuses, etc.
- étiquettes de radio fréquence (RFID), etc.
- ordinateurs distants, centrale de supervision, etc.
- et similaires.

A l'aide du logiciel du constructeur disponible pour chaque type de contrôleur, l'utilisateur spécialement qualifié, appelé communément automaticien ou programmeur, conçoit et décrit la configuration de tous les équipements, les réseaux, etc. devant être connectés au contrôleur, ainsi que la logique de fonctionnement de l'installation industrielle qui sera écrite dans le contrôleur sous la forme d'un programme utilisateur. A l'issue du développement de ce programme utilisateur en phase d'étude, et après une mise au point théorique « Hors ligne », le programme utilisateur est alors transféré dans le contrôleur en mode « En ligne ». Le mode « Hors ligne » signifie que le programmeur développe son programme à l'aide du logiciel constructeur mais sans connexion physique avec le contrôleur de l'installation industrielle, par opposition au mode « En ligne », où le programmeur établit une connexion physique avec le contrôleur, par le biais du logiciel constructeur, pour mettre au point son programme ainsi que l'installation industrielle automatisée, pilotée et opérationnelle lorsque le contrôleur est en mode « Marche ».

L'ensemble de la logique programmée et développée par le programmeur qui décrit précisément le comportement attendu de l'installation industrielle à commander est contenu dans le « code programme » ou « programme utilisateur ». Ce programme utilisateur présent dans le contrôleur contient essentiellement les éléments suivants :
- des tâches programmes : ensemble de sous-programmes et/ou de routines.
- des sous-programmes et/ou des routines : zones du programme qui contiennent des lignes d'équations.
- des lignes d'équations : dans lesquelles l'utilisateur regroupe les instructions élémentaires de l'installation industrielle, pour réaliser de la logique combinatoire, un cycle de production, des messages opérateurs, du diagnostic de défauts, etc.
- des instructions élémentaires du contrôleur.
- des modules dédiés du contrôleur qui réalisent des fonctions systèmes.
- des modules spécifiques créés par l'utilisateur pour l'installation industrielle concernée connus sous le nom de « module générique fonctionnel » et en anglais « addon ».
- des variables internes qui représentent les actions du programme utilisateur, qui décrivent et réalisent les liens et les appels entre les instructions élémentaires, pour accomplir les fonctions requises.
- la configuration du matériel
- et similaires.

Outre la programmation des différents modes de fonctionnement d'une installation industrielle, le programmeur doit ajouter et mettre au point des équations destinées à informer l'utilisateur sur l'état de ces modes de fonctionnement, les opérations à effectuer, etc. mais également à déclencher des messages de diagnostic pour informer et aider l'utilisateur, en cas de dysfonctionnements ou d'arrêts inopinés de l'installation industrielle. La création de ces équations programmées doit permettre d'obtenir un diagnostic pertinent de tous les composants de l'installation pour signaler sans ambiguïté par exemple la présence d'une panne électrique, d'une panne mécanique, la présence d'un arrêt de sécurité, d'un arrêt de production, etc.

Lorsque le programme utilisateur contient plusieurs tâches programmes, le contrôleur alloue alternativement des ressources à chacune d'entre elles, de telle sorte à traiter au plus vite toutes les instructions présentes dans chacun des programmes et sous-programmes qu'elle contient, en tenant compte des critères de paramétrage attribués aux différentes tâches, leur appel, leur type, leur durée, leur priorité, etc. Ce mécanisme, appelé l'ordonnancement des tâches programmes, est parfois interrompu momentanément par le contrôleur en fonction de ses ressources ou afin de répondre à une autre tâche de traitement du système plus prioritaire, ou encore aux sollicitations asynchrones du logiciel constructeur des «systèmes externes» connectés, ou encore tels qu'à titre d'exemple des autres contrôleurs, des ordinateurs distants, des Interfaces Hommes Machines, une console de programmation, etc. Ces requêtes en provenance des systèmes externes sont dites asynchrones, lorsqu'elles peuvent survenir à tout instant pendant l'exécution du programme utilisateur, contrairement à des requêtes synchrones qui seraient alors traitées à un endroit et à un instant précis dans le programme utilisateur et donc qui seraient encore moins efficaces qu'une requête asynchrone pour le besoin évoqué. Ces échanges complémentaires aux tâches usuelles du contrôleur accentuent son travail et impactent par conséquent sur sa réactivité à répondre aux sollicitations de ces systèmes externes. L'activité et le temps de réaction du contrôleur dépendent également des paramètres temporels et des priorités définies dans la configuration des équipements et des tâches. Tout ceci contribue par conséquent à ce que les temps de réponse du contrôleur à un système externe sont ni instantanés, ni répétitifs.

En mode « marche », le contrôleur exécute successivement une à une toutes les lignes du programme utilisateur pour appliquer le fonctionnement défini et écrit par le programmeur dans chacune des tâches qui pilotent l'installation industrielle pilotée. Chaque cycle de travail complet d'une tâche du contrôleur est appelé « tour de cycle » TC. Un tour de cycle TC correspond à un « temps de cycle » TC qui représente le temps total nécessaire au contrôleur pour effectuer l'ensemble des instructions contenues dans une tâche du programme utilisateur, tout en réalisant simultanément l'ensemble de ses autres propres traitements internes pour répondre notamment à tous les systèmes externes connectés. Dans la suite de la description, la référence « TC » désigne soit le tour de cycle, soit le temps de cycle du contrôleur en fonction du contexte. Ce temps de cycle évolue en fonction des installations, généralement, de quelques millisecondes à quelques dizaines ou centaines de millisecondes. Les tours de cycle TC sont enchaînés et répétés inlassablement par le contrôleur, excepté lorsqu'il est positionné en mode « arrêt » par l'utilisateur.

Les variables internes qui coordonnent le fonctionnement et l'exécution des instructions du programme utilisateur sont dénommées par la suite « variables ». Ces variables sont généralement nominatives car elles sont associées à un nom ou à un symbole explicite créé par et pour l'utilisateur pour favoriser la lisibilité et la compréhension du programme utilisateur. Elles sont parfois associées par l'utilisateur à une adresse physique de la mémoire interne de chaque contrôleur. Le terme générique « variable(s) » utilisé dans la présente invention recouvre ces deux formes de représentation « symbole » et « adresse » indépendamment. Ces variables sont les éléments majeurs exploités par la présente invention. Elles sont en effet très importantes dans un contrôleur puisque leur état ou leur évolution, reflète à tout instant le comportement et le fonctionnement de l'installation industrielle.

Elles se présentent essentiellement suivant trois catégories distinctes :
- les variables booléennes, représentant deux états binaires stables d'une variable égaux à 0 ou à 1, appelés aussi « Tout Ou Rien ».
- les variables numériques, nombres entiers ou réels, caractérisés par des chiffres positifs ou négatifs, avec ou sans décimale.
- les variables complexes de type chaîne de caractères ou similaire, qui à ce jour ne sont pas surveillées par les systèmes de surveillance existants puisqu'il n'est pas possible de visualiser graphiquement les évolutions de ce type de variables.
Quel que soit le type de variables, nous conviendrons d'utiliser dans la suite du document le terme général « état logique » pour désigner la valeur d'une variable.

En fonction des besoins requis, il est possible de créer soit des variables « globales », utilisables partout dans le programme utilisateur, soit des variables « locales », utilisables seulement dans un seul sous-ensemble du programme ou dans un module « addon » du programme utilisateur. Dans la suite de la description, le terme « variables » regroupe l'ensemble de toutes ces variables : booléennes, numériques, complexes par exemple de type chaîne de caractères, appartement à un module « addon », globales et locales, ces différents types de variables n'étant pas limitatifs pour l'invention, et son adaptation à d'autres types de données spécifiques est envisageable.

Les difficultés d'écriture et de mise au point du programme utilisateur du contrôleur, des modules « addon » du programme utilisateur et de l'ensemble des éléments évoqués entraînent fréquemment des comportements imprévisibles et indésirables du contrôleur et/ou de l'installation industrielle, et/ou l'émission de messages incorrects transmis par le contrôleur à l'utilisateur, et/ou des calculs erronés de données, et/ou la perte d'information entre les divers équipements connectés, etc. Pour tenter de déterminer la cause de ces aléas et de les corriger, le logiciel du constructeur du contrôleur dispose de certaines fonctionnalités internes de contrôle et de mise au point. Toutefois, ces fonctions internes sont soumises également aux nombreux inconvénients et lacunes que ceux rencontrés lors de l'utilisation de systèmes d'analyse externes, proposés par certains fournisseurs spécialisés, qui tentent de répondre à ce besoin, en interrogeant périodiquement le contrôleur via un support physique de communication pour obtenir l'évolution des variables. Ces solutions ne répondent pas complètement aux besoins et sont insuffisantes pour obtenir une compréhension approfondie de certains cas de blocage ou pour résoudre des problèmes fugitifs ou complexes du fait des nombreux inconvénients évoqués ci-après. Elles nécessitent de connecter physiquement une console de programmation ou un système d'analyse externe à chaque contrôleur à analyser. Ce procédé d'analyse est parfois complexe et sa mise en œuvre laborieuse, coûteuse et parfois sans résultats probants. L'utilisation d'un système d'analyse externe nécessite la connaissance de ce système d'analyse externe et le développement d'une application spécifique dans ce système d'analyse externe pour l'élaboration de cette surveillance, et généralement l'ajout de variables programmes additionnelles dans le contrôleur. Ces variables additionnelles sont souvent nécessaires pour effectuer une image des variables non accessibles directement par le système externe, ou encore pour effectuer un regroupement des variables à surveiller dans des tableaux de données intermédiaires, afin de réduire les contraintes liées aux multiples requêtes de lecture du système externe. Les échanges des données entre le système d'analyse externe et le contrôleur sont soumis aux temps de réponse aléatoires entre les deux équipements. La surveillance des variables ne peut donc pas être effectuée en temps réel, compte tenu du décalage temporel entre le temps d'apparition d'un évènement et le temps de réception de l'information dans le système d'analyse externe. Le contrôleur ne pouvant pas répondre instantanément au système d'analyse externe, certaines évolutions de variables fugitives sont parfois indétectables. On peut citer à titre d'exemple le cas d'une variable qui évolue ou change d'état plusieurs fois dans un même tour de cycle et qui, généralement, ne pourra pas être détectée par un système d'analyse externe.

Le système d'analyse externe nécessite la mise en œuvre d'une communication avec le contrôleur, parfois laborieuse à obtenir, du fait des incompatibilités de versions et d'évolutions entre les équipements et logiciels. L'ajout d'échanges permanents entre le système d'analyse externe et le contrôleur augmente l'activité du contrôleur, créant parfois de nouvelles perturbations dans sa communication avec les autres équipements. Les temps de communication obtenus sont étroitement liés aux performances de vitesse du contrôleur et du système externe, ce qui génère des résultats de mesure différents suivant les architectures mises en œuvre pour cette surveillance. Le système d'analyse externe génère de nombreuses requêtes périodiques à destination du contrôleur, y compris lorsque les variables du contrôleur n'évoluent pas, surchargeant inutilement les temps de communication. De plus, le système d'analyse externe ne tient pas compte de la structure du programme utilisateur ni des interactions entre les tâches contenues dans le contrôleur et ne permet donc pas de localiser l'origine exacte de l'écriture des variables provoquant les aléas. Il doit rester connecté en permanence au contrôleur sans présenter lui-même des aléas de fonctionnement ni de coupure de tension. Lorsque le contrôleur est embarqué sur un mécanisme mobile, une connexion câblée est parfois physiquement impossible à réaliser entre le contrôleur et le système d'analyse externe. Lorsque le système d'analyse externe est utilisé comme procédé curatif et qu'il est mis en place après avoir déjà détecté des anomalies de fonctionnement, il ne permet pas l'analyse des pannes antérieures à sa mise en place ou après son retrait si le problème réapparait. L'accès à l'ensemble de toutes les variables du contrôleur est généralement compliqué, voire impossible pour certaines d'entre elles. Il ne permet pas par exemple d'accéder aux variables internes des modules « addon » utilisateurs pour analyser et mettre au point leur fonctionnement. De même, il ne permet pas de surveiller les changements d'états de variables complexes de type chaîne de caractères par exemple. D'une manière générale, le système d'analyse externe ne permet pas la lecture directe, et en temps réel, de toutes les variables de l'installation.

La publication EP 0 436 019 A1 propose un système de surveillance pour les très anciens contrôleurs pourvus de zones mémoires distinctes. Ce système est contenu dans une zone mémoire RAM distincte et donc séparée du programme utilisateur, lui-même contenu dans une zone mémoire ROM, et ne peut ainsi pas effectuer une mesure en temps réel des signaux, c'est à dire au moment où ils sont exécutés par le programme utilisateur. D'autre part, ce système collecte les signaux à mesurer dans un registre commun et n'enregistre la trace de ces signaux dans une unité mémoire unique que s'il y a un changement d'état du registre commun et non des signaux pris individuellement, ce qui ne permet de détecter plusieurs changements de signaux des variables dans un même tour de cycle. De plus, ce système ne propose aucun moyen de datation de cet enregistrement et ne s'applique qu'aux variables de type booléennes.

La publication EP 2 672 348 A1 classifie des variables collectées par un système de surveillance intégré dans un programme utilisateur en leur associant un numéro, un index ou un temps. Ce système enregistre à chaque scrutation des modules de surveillance toutes les variables à surveiller même si leur état n'a pas changé, ce qui crée un nombre très élevé d'enregistrements inutiles, pénalisant la capacité et la rapidité du contrôleur comme expliqué précédemment en référence au système d'analyse externe, et complexifie l'analyse des enregistrements. De plus, ce système doit être démarré et paramétré à distance par un périphérique externe et n'est de ce fait pas autonome ou pilotable à partir de conditions programmables par l'utilisateur. Il propose par ailleurs la surveillance d'un nombre très limité d'une douzaine de variables et est limité aux variables booléennes et numériques.

Les publications US 2003/014387 A1 et US 5,774,377 A proposent des systèmes de surveillance d'automates à distance dans lesquels les données collectées sont horodatées et envoyées vers une base de données par le réseau Internet.

Les différents systèmes de surveillance connus ne permettent donc pas une analyse précise, ni une traçabilité parfaite et suffisante du fonctionnement du contrôleur. Il n'existe donc pas à l'heure actuelle aucune solution complètement satisfaisante.

### Exposé de l'invention :

La présente invention vise à pallier les inconvénients mentionnés ci-dessus en proposant une solution ergonomique permettant de traquer en temps réel l'évolution de tout ou partie des variables au cœur même d'un programme utilisateur et des modules d'instances « addon », quel que soit le type de variables booléennes, numériques, complexes (chaines de caractères ou similaires), pour restituer le comportement du contrôleur et de l'installation industrielle sous une forme graphique, temporelle interprétable facilement par l'utilisateur, en pénalisant le moins possible les ressources du contrôleur. La forme graphique mise en œuvre permet de visualiser, quel que soit le type de variables, uniquement tous les changements d'état de chacune d'elles, leurs valeurs exactes lors de chaque changement d'état ainsi que l'horodatage de ces changements. L'utilisateur dispose ainsi directement et très précisément de l'évolution de tout ou partie des variables programme présentes dans la base de données du contrôleur, sans avoir recours à d'autres variables ajoutées, ni à des tables de données dédiées. Les résultats obtenus sont exploitables immédiatement par l'utilisateur avec un appareil d'expertise dédié et dissocié permettant d'effectuer sereinement une analyse des résultats soit en dehors du contexte de production permettant de définir les actions correctives nécessaires dans les meilleures conditions, soit directement pendant la production en se connectant au contrôleur pour analyser les métadonnées de surveillance immédiatement après leur enregistrement permettant d'accélérer le cas échéant les actions correctives. L'invention proposée peut être mise en œuvre pour n'importe quel type de contrôleur et ce quel que soit le constructeur dudit contrôleur.

Dans ce but, l'invention concerne un procédé de surveillance et d'expertise du genre indiqué en préambule, selon la revendication 1.

Les données temporelles lues par l'unité d'horodatage dudit module spécifique de surveillance peuvent correspondre au temps réel d'une horloge interne dudit contrôleur, lorsque ledit module spécifique de surveillance est un module paramétré en mode « autonome » ou en mode « maître », ou au temps lu par un autre module spécifique de surveillance, lorsque ledit module spécifique de surveillance est un module paramétré en mode « esclave » et est associé à l'autre module spécifique de surveillance paramétré en mode « maître ».

De manière avantageuse, l'on peut attribuer audit module spécifique de surveillance un nombre de variables à surveiller, et en ce que l'unité de lecture dudit module spécifique de surveillance lit l'état logique de chacune desdites variables surveillées dans ledit tour de cycle instantané et enregistre dans ladite unité mémoire globale dudit contrôleur l'état logique de toutes les variables surveillées dans ledit tour de cycle instantané si l'état logique d'au moins une desdites variables surveillées a changé.

De préférence, l'on implante plusieurs modules de surveillance à différents emplacements choisis dans ledit programme utilisateur du contrôleur, dans les routines ou modules « addons » utilisateurs, concernées par les variables à surveiller, et l'on attribue à chaque module spécifique de surveillance une ou généralement plusieurs de ces variables à surveiller. Dans la suite du document, la notion de programme utilisateur fera référence soit à une routine programme, soit à un module « addon » utilisateur.

Pour analyser ladite au moins une métadonnée enregistrée dans l'unité mémoire globale dudit contrôleur et identifier un éventuel défaut dans ledit programme utilisateur et/ou ladite installation industrielle, l'on récupère dans un appareil d'expertise dédié ladite au moins une métadonnée enregistrée dans l'unité mémoire globale dudit contrôleur. L'on peut alors soit procéder à une analyse statique hors ligne et de manière différée de ladite au moins une métadonnée récupérée au moyen d'un logiciel d'expertise dédié, soit connecter ledit appareil d'expertise dédié audit contrôleur pour procéder à une analyse dynamique, au fil de l'eau, de ladite au moins une métadonnée dernièrement enregistrée. L'on peut récupérer ladite au moins une métadonnée à tout instant dans l'appareil d'expertise dédié.

Selon les besoins, l'on peut paramétrer par une unité de paramétrage le fonctionnement du module spécifique de surveillance au moyen d'au moins un paramètre choisi dans le groupe de paramètres comprenant une fonction « marche » pour laquelle ledit module spécifique de surveillance est activé soit manuellement par une commande externe ou l'utilisateur, soit automatiquement sur conditions par ledit programme utilisateur, une fonction « arrêt » pour laquelle ledit module spécifique de surveillance est désactivé, une fonction « initialisation » pour laquelle ledit module spécifique de surveillance remet à zéro ses métadonnées correspondant aux variables surveillées et enregistrées dans ladite unité mémoire globale dudit contrôleur, un mode « autonome » ou un mode « maître » dans lequel ledit module spécifique de surveillance lit le temps réel de l'horloge interne dudit contrôleur, un mode « esclave » dans lequel ledit module spécifique de surveillance utilise le temps lu par un autre module spécifique de surveillance paramétré en mode « maître ».

L'on peut aussi paramétrer dans ledit module spécifique de surveillance le nombre limite de métadonnées que ladite unité d'enregistrement peut enregistrer dans ladite unité mémoire globale dudit contrôleur, et au-delà de cette limite, ledit module spécifique de surveillance peut soit interrompre l'enregistrement des nouvelles métadonnées, soit enregistrer les nouvelles métadonnées en écrasant ou en ré-écrasant les métadonnées enregistrées initialement et en reprenant les enregistrements à l'emplacement 0 de ladite unité mémoire globale et en reprenant les enregistrements depuis cet emplacement.
Il est également possible d'inhiber la surveillance d'au moins une des variables dites surveillées par ledit module spécifique de surveillance. Dans ce cas, l'état logique de la variable inhibée ne sera enregistré et visualisable que lorsque l'état logique d'au moins une des autres variables non inhibées de ce module spécifique de surveillance changera, permettant ainsi de réduire dans certains cas considérablement le volume des métadonnées et d'augmenter la durée d'enregistrement.

Dans la forme de réalisation préférée de l'invention, pour chaque constructeur différent de contrôleur, l'on conçoit un module générique dédié à la surveillance dans ledit programme utilisateur dudit contrôleur sous la forme d'un code programme unique, sous forme d'un module « addon » utilisateur, comportant au moins lesdites unités de lecture, de contrôle, d'horodatage, d'enregistrement et de paramétrage, et l'on implante chaque module spécifique de surveillance sous la forme d'un module programme exécutable dudit module générique dédié à la surveillance.

Dans ce but également, l'invention concerne un équipement de surveillance et d'expertise du genre indiqué en préambule, caractérisé en ce qu'il met en œuvre le procédé de surveillance et d'expertise tel que défini ci-dessus.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 représente l'organigramme de fonctionnement d'un module spécifique de surveillance MSy selon l'invention implanté à l'intérieur d'un programme utilisateur d'un contrôleur,
- la figure 2 représente l'organigramme de fonctionnement du module générique de surveillance appelé par le module spécifique de surveillance de la figure 1,
- la figure 3 est un diagramme de l'évolution dans le temps d'une même variable V1 surveillée par trois modules spécifiques de surveillance paramétrés différemment,
- la figure 4 est un diagramme montrant l'évolution dans le temps d'une variable V1 surveillée par rapport au temps de cycle du contrôleur, et
- la figure 5 est un diagramme représentant graphiquement l'évolution de quatre variables V1 à V4 surveillées pour illustrer des anomalies, des dysfonctionnements ou le cycle périodique d'une tâche du contrôleur.

### Illustrations de l'invention et meilleure manière de la réaliser :

Le procédé de surveillance et d'expertise de la présente invention consiste à implanter, directement au sein même du programme utilisateur d'un contrôleur C qui pilote une installation industrielle, un ou plusieurs modules spécifiques de surveillance MS1 à MSt, où t désigne le nombre total de modules implantés, agencés pour surveiller tout ou partie des variables internes dudit programme utilisateur. Lorsqu'on parle d'un seul module spécifique de surveillance, on le désigne MSy où y est compris entre 1 et t. On désigne par V1 à Vt le nombre total de variables surveillées par l'ensemble des modules spécifiques de surveillance MSy implantés, et par V1 à Vn le nombre maximum de variables surveillées par chaque module spécifique de surveillance MSy implanté. L'ensemble des variables V1 à Vt surveillées peuvent être indifféremment des Entrées/Sorties de capteurs, composants, machines, etc., des variables internes du programme utilisateur, des variables de l'installation industrielle, des variables de communication, etc., des variables booléennes, numériques, complexes (chaines de caractères), etc. Dans la suite de la description, la notion de « programme utilisateur » fait référence soit à une routine programme, soit à un module « addon », concerné par les variables V1 à Vt à surveiller.

Les modules spécifiques de surveillance MS1 à MSt forment ainsi des « mouchards » ou des « traqueurs » au cœur même du programme utilisateur. Ils ont pour fonction de mémoriser et d'inventorier tous les changements d'états de n'importe quelle variable V1 à Vt surveillée par lesdits modules spécifiques de surveillance MS1 à MSt concernés, en associant la date et l'heure Tj de chaque changement d'état. A titre d'exemple de la pertinence de cette surveillance, si l'on utilise un module spécifique de surveillance MSy implanté dans le programme utilisateur à chaque endroit où évolue une variable V1, par exemple après chaque écriture de ladite variable V1 dans ledit programme utilisateur, il est ainsi possible de détecter toutes les évolutions de cette variable V1 et notamment ses éventuels multiples changements d'état intervenus dans un seul et même tour de cycle TCi du contrôleur C, ce qu'aucun système de surveillance ne peut faire à l'heure actuelle.

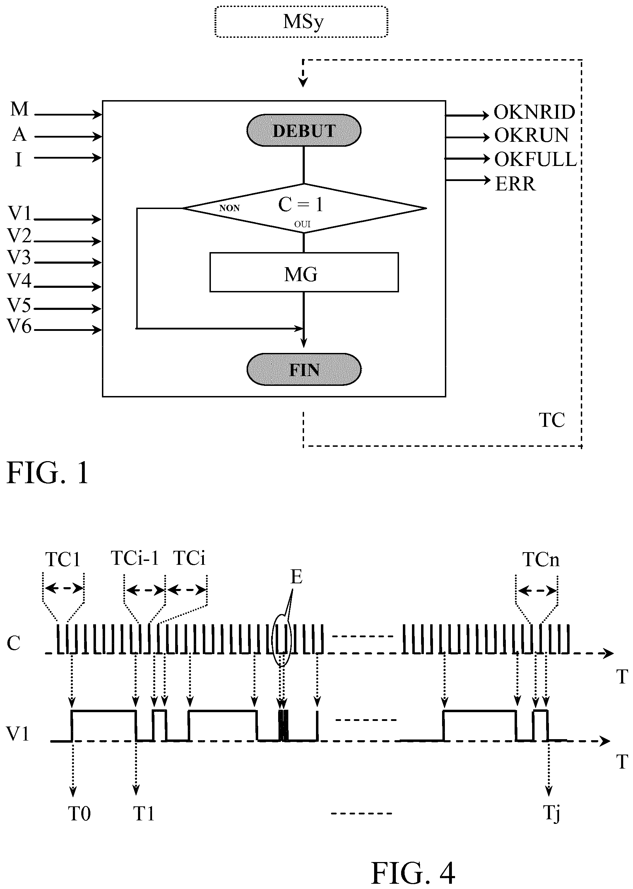

La figure 4 permet d'illustrer cet exemple. Elle représente l'évolution dans le temps des changements d'état d'une variable V1 surveillée par un module spécifique de surveillance MSy par rapport au temps de cycle TC du contrôleur C. Elle indique par ailleurs la possibilité de détecter les éventuels multiples changements d'états d'une même variable V1 dans un même tour de cycle TCi (voir bulle E). Ce type d'aléa n'est pas détectable ni visualisable à l'aide d'un système de surveillance externe. Pour indication, la périodicité du temps de cycle TC du contrôleur est par exemple de l'ordre de quelques millisecondes à quelques dizaines de millisecondes.

Ensuite, les données collectées pendant plusieurs tours de cycle TC0 à TCi, où i désigne le temps de cycle instantané, par les modules spécifiques de surveillance MS 1 à MSt pour identifier un éventuel dysfonctionnement dans ledit programme sont exploitées au moyen d'un logiciel d'expertise dédié sur un appareil d'expertise dédié qui permet d'effectuer une expertise distante ou pas. Ce logiciel d'expertise dédié permet notamment de représenter les changements d'état et/ou les évolutions des variables V1 à Vt surveillées sous une forme graphique en fonction du temps, représentative du fonctionnement du contrôleur C et de l'installation industrielle qu'il pilote, dans le but de pouvoir déceler l'origine d'un défaut, d'une panne ou de tout autre aléa, effectuer des mesures diverses, de production, de temps de cycle, déterminer les interactions entre variables, etc.

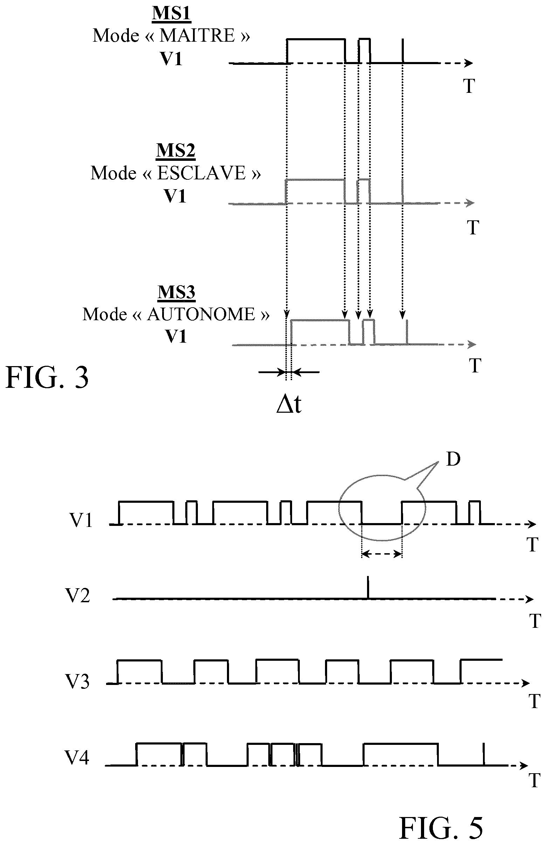

La figure 5 permet d'illustrer graphiquement l'évolution de quatre variables V1, V2, V3 et V4 qui montrent des anomalies ou dysfonctionnements. Le comportement anormal de la variable V1 identifié par la bulle D peut être corrélé par exemple avec le défaut fugitif intervenu sur la variable V2 au même moment. La périodicité des changements d'état de la variable V3, qui pourrait être par exemple la périodicité d'une tâche programme, n'est pas régulière et l'évolution de la variable V4 montre des disparitions et apparitions fugitives anormales du signal.

Par conséquent, l'équipement permettant la mise en œuvre du procédé de surveillance et d'expertise selon l'invention comporte au moins les modules spécifiques de surveillance MS1 à MSt, qui sont des modules programmes implantés par le programmeur et/ou l'utilisateur dans le programme utilisateur du contrôleur C comme expliqué ci-dessous au plus près des variables V1 à Vt à surveiller, à savoir après l'écriture desdites variables dans ledit programme utilisateur et préférentiellement immédiatement après leur écriture, et l'appareil d'expertise dédié pourvu dudit logiciel d'expertise dédié, cet appareil pouvant être un ordinateur portable ou similaire, distant ou pas dudit contrôleur C.

Les modules spécifiques de surveillance MS1 à MSt sont associés à un module générique de surveillance MG, connu sous le nom de « module générique fonctionnel » et en anglais « addon » déjà évoqué précédemment, module développé par l'utilisateur dans le programme utilisateur du contrôleur C à partir du logiciel du constructeur du contrôleur C. Le module générique de surveillance MG prend la forme d'un code programme unique regroupant les fonctionnalités nécessaires pour réaliser la fonction de surveillance des variables V1 à Vt selon le procédé de l'invention. Ce code programme unique ne peut pas être exécuté en tant que tel. Il peut par contre être appelé autant de fois que nécessaire par des modules programmes exécutables connus sous le nom d' « instances », formant lesdits modules spécifiques de surveillance MS1 à MSt. L'utilisateur peut intégrer, ou instancier, et ainsi créer très rapidement un ou plusieurs modules spécifiques de surveillance qu'il identifie chacun par un nom tel que MS1 à MSt ou MSy et qu'il implante au cœur même du programme utilisateur du contrôleur C à des endroits, zones ou emplacements qu'il choisit, notamment au plus près de chaque variable V1 à Vt qu'il souhaite surveiller, soit après l'écriture de chaque variable dans ledit programme utilisateur et de préférence immédiatement après leur écriture. Il peut en fonction des besoins ajouter ou supprimer à sa guise et très facilement un ou plusieurs modules spécifiques de surveillance MS 1 à MSt et ce même pendant le fonctionnement du contrôleur C. Il attribue à chacun de ces modules spécifiques de surveillance MS1 à MSt un nombre défini de variables V1 à Vn à surveiller de 1 à n. Par conséquent, la logique de fonctionnement est identique pour tous les modules spécifiques de surveillance MS1 à MSt puisqu'elle est dictée par le code programme unique du module générique de surveillance MG. Mais leur comportement est indépendant puisque chaque module spécifique de surveillance MSy exploite ses propres variables V1 à Vn d'entrées ainsi que ses propres paramètres de fonctionnement déterminés par l'utilisateur.

Chaque module spécifique de surveillance MSy permet de surveiller un nombre limité de variables V1 à Vn, ce nombre n dépendant du nombre d'entrées disponibles sur le module générique de surveillance MG choisi. Chaque variable V1 à Vn à surveiller est associée à une des entrées dudit module spécifique de surveillance MSy choisi, permettant l'enregistrement des changements d'état logique de ladite variable dans le tour de cycle correspondant à cet ou à ces éventuel(s) changement(s) d'état logique.

Par conséquent, autant de modules spécifiques de surveillance MS1 à MSt que nécessaire peuvent être implantés dans le programme utilisateur du contrôleur C pour augmenter le nombre total de variables Vt à surveiller en fonction des besoins. Le nombre total de modules spécifiques de surveillance MSt implantés dans le programme utilisateur du contrôleur C dépend donc du nombre total de variables Vt à mesurer ou à surveiller. Pour réduire au maximum l'impact de ces modules spécifiques de surveillance MS1 à MSt sur l'unité mémoire UM dédiée du contrôleur C et sur son temps de cycle TC, des modules génériques de surveillance MG de tailles différentes peuvent être disponibles en fonction du nombre et du type de variables d'entrée souhaitées par l'utilisateur. On peut citer à titre d'exemple un module générique de surveillance MG pour huit variables, un module générique de surveillance MG pour seize variables, etc., étant précisé que ces nombres sont donnés à titre indicatif et ne sont pas limitatifs. Pour restreindre le temps d'exécution des modules spécifiques de surveillance MS 1 à MSt et la consommation induite sur le temps de cycle du contrôleur C, ces modules spécifiques de surveillance MSy ne sont réellement sollicités que lorsque la ou les variables V1 à Vn surveillée(s) par le module spécifique de surveillance MSy concerné évolue(nt), comme expliqué plus loin. A titre d'exemple uniquement, pour un contrôleur C travaillant avec un processeur classique de type Rockwell®, le temps moyen d'exécution d'un seul module spécifique de surveillance de seize variables V1 à V16 est d'environ 100 microsecondes, valeur donnée uniquement à titre indicatif, puisque ce temps est directement lié au type de contrôleur C utilisé.

La figure 1 représente sous la forme d'un organigramme la façon dont un module spécifique de surveillance MSy, où y est un nombre quelconque entre 1 et t, est exécuté pendant un tour de cycle TC du contrôleur C au cours duquel les instructions programmées dans ledit programme utilisateur sont exécutées en fonction des variables V1 à V6 à surveiller associées audit module MSy. Suivant l'exemple illustré, le module spécifique de surveillance MSy comporte trois entrées de contrôle, à savoir une entrée M correspondant à la fonction « marche », une entrée A correspondant à la fonction « arrêt » et une entrée I correspondant à la fonction « initialisation », ainsi que six entrées de variables V1 à V6. Ces trois entrées de contrôle permettent à l'utilisateur de modifier, si nécessaire et à tout moment, le mode de fonctionnement de chaque module spécifique de surveillance MSy. L'entrée M permet d'activer le fonctionnement du module spécifique de surveillance MSy, l'entrée A permet d'arrêter le fonctionnement du module spécifique de surveillance MSy et l'entrée I permet de réinitialiser les métadonnées du module spécifique de surveillance. Les entrées de contrôle M, A et I de chaque module spécifique de surveillance MS1 à MSt peuvent être activées par l'utilisateur de façon permanente pour être égales à 1 ou à 0. Elles peuvent aussi être activées par une ligne de programme écrite dans le programme utilisateur du contrôleur C en fonction d'un contexte particulier. On peut citer à titre d'exemple : démarrage des enregistrements dans un créneau horaire particulier, arrêt des enregistrements sur détection d'une anomalie, etc. Il existe encore d'autres entrées de paramétrage de fonctionnement qui seront décrits plus loin.

Dans l'exemple illustré, le module spécifique de surveillance MSy comporte également des sorties d'état pour informer l'utilisateur sur l'état de fonctionnement de ce module MSy, telles que : autorisation d'utilisation après le contrôle du numéro d'identification NRID requis (OKNRID), paramétré en mode enregistrement continu ou « tournant » (OKWRAP), en marche (OKRUN), mémoire déclarée saturée (OKFULL), erreur (ERR), détail des erreurs, etc.

En référence à la figure 1, si le numéro d'identification NRID d'autorisation d'utilisation du module spécifique de surveillance MSy, vérifié par MSy, est conforme à la valeur attendue, et si le contrôleur C est en mode « marche », c'est-à-dire respectivement que les sorties OKNRID et OKRUN sont dans un état logique égal à 1, alors le module spécifique de surveillance MSy appelle le module générique de surveillance MG pour exécuter les fonctionnalités nécessaires à la surveillance des variables V1 à V6 à chaque tour de cycle TC du contrôleur C, et ce indéfiniment à chaque fois que ce tour de cycle TC se reproduit dans ledit contrôleur C.

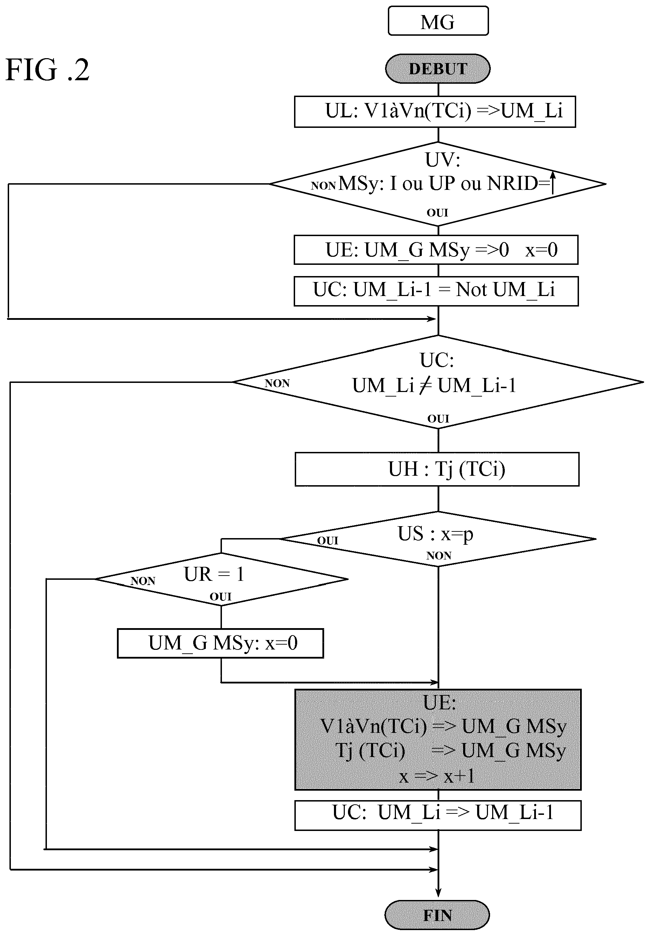

La figure 2 illustre sous la forme d'un organigramme les fonctionnalités du module générique de surveillance MG, exécutées de manière identique à chaque fois que ledit module générique de surveillance MG est appelé par un module spécifique de surveillance MSy conformément à la figure 1. Ces fonctionnalités sont exprimées sous la forme d'unités agencées pour réaliser une fonction, mais correspondent à des lignes de programme exécutées.

A chaque appel du module générique de surveillance MG par le module spécifique de surveillance MSy, une unité de lecture UL lit directement en temps réel l'état logique de chacune des variables V1 à Vn du tour de cycle instantané TCi du contrôleur C pour les stocker dans une unité mémoire locale instantanée UM_Li du contrôleur C (UL : V1 à Vn(TCi) => UM_Li). Ensuite, une unité de contrôle UC compare l'état logique de ces variables V1 à Vn du tour de cycle instantané TCi stocké dans l'unité mémoire locale instantanée UM_Li avec l'état logique de ces mêmes variables V1 à Vn du tour de cycle précédent TCi-1 préalablement enregistré dans l'unité mémoire locale UM_Li-1 du contrôleur C (UC : UM_Li ≠ UM_Li-1). S'il n'y a pas de changement d'état ou d'évolution de l'une au moins desdites variables V1 à Vn, c'est-à-dire lorsque UM_Li = UM_Li-1, alors aucun enregistrement dans les métadonnées n'est effectué et l'exécution du code programme unique du module générique de surveillance MG est en attente d'un prochain appel d'un autre module spécifique de surveillance MS1 à MSt. S'il y a un changement d'état ou d'évolution de l'une au moins desdites variables V1 à Vn, alors une unité d'enregistrement UE enregistre et horodate l'état logique de toutes les variables V1 à Vn du tour de cycle instantané TCi dans une unité de mémoire globale UM_G du contrôleur C correspondant au module spécifique de surveillance MSy, puis incrémente d'une unité l'indice x du nombre d'enregistrements (UE : V1 à Vn(TCi) + Tj(C) => UM_G MSy puis x=>x+1). Dans ce cas, l'unité de contrôle UC réactualise l'unité mémoire locale UM_L en mémorisant le nouvel état logique desdites variables V1 à Vn à la place du précédent (UM_Li => UM_Li-1). L'exécution du code programme unique du module générique de surveillance MG est ensuite en attente d'un prochain appel d'un autre module spécifique de surveillance MS1 à MSt. Le module générique de surveillance MG permet en effet d'horodater simultanément les changements d'état des variables V1 à Vn surveillées par ledit module spécifique de surveillance MSy et uniquement en cas de changement d'état. A cet effet, il comporte une unité d'horodatage UH des données temporelles instantanées Tj, où j désigne la date et l'heure exactes correspondant au tour de cycle instantané TCi du contrôleur C (UH : Tj(TCi)). Dans ce but, l'unité d'horodatage UH lit soit le temps réel de l'horloge interne du contrôleur C lorsque ledit module spécifique de surveillance MSy est paramétré en mode « autonome » ou en mode « maître », soit le temps lu par un autre module spécifique de surveillance MS1 à MSt paramétré en mode « maître » lorsque ledit module spécifique de surveillance MSy concerné est paramétré un mode « esclave » et qu'il dépend d'un module spécifique de surveillance MS1 à MSt paramétré en mode « maître » que l'utilisateur lui aura associé. Ces paramètres de fonctionnement sont expliqués dans la suite de la description. Les données temporelles instantanées Tj lues sont associées au nouvel état logique des variables V1 à Vn du tour de cycle instantané TCi et forment ensemble des métadonnées (V1 à Vn(TCi) + Tj(TCi)). Ce sont ces métadonnées qui sont enregistrées par l'unité d'enregistrement UE dans l'unité mémoire globale UM_G du contrôleur C, et qui seront ensuite analysées et exploitées de manière différée ou non, sans perte de précision des données, par l'appareil d'expertise dédié. Elles permettront une visualisation en temps réel du programme utilisateur et/ou de l'installation industrielle et ainsi qu'une traçabilité très précise de leur fonctionnement et de leur comportement.

Apparaît également sur l'organigramme de la figure 2 une unité de vérification UV qui vérifie les entrées de contrôle M, A, I et les paramètres de fonctionnement choisis par l'utilisateur pour ledit module spécifique de surveillance MSy, tels que la présence d'une requête de «marche» ou d'« arrêt », d'« initialisation », etc. En mode « initialisation » I du module spécifique de surveillance MSy ou lors d'un changement du numéro d'identification NRID ou encore lors d'un changement du paramétrage PANBREC du nombre maximum d'enregistrements souhaité dans la mémoire globale UM_G du contrôleur C (MSy : I ou UP (*UP*=*Unité de paramétrage non représentée sur les figures*) ou NRID = ↑), alors les mémoires des états logiques des variables V1 à Vn, stockées dans l'unité mémoire locale UM_Li-1 et correspondant au temps de cycle précédent TCi-1, seront initialisées à la valeur opposée des états logiques instantanés des variables V1 à Vn au tour de cycle instantané TCi de telle sorte à déclencher un changement d'état et un premier nouvel enregistrement des métadonnées (UC : UM_Li-1 = Not UM_Li). Préalablement, l'unité d'enregistrement UE réinitialise l'unité mémoire globale UM_G du contrôleur C correspondant au module spécifique de surveillance MSy (UE : UM_G MSy => 0 et x=0).

Notons également qu'une demande d'initialisation d'un module spécifique de surveillance MSy paramétré en mode Maître provoque automatiquement une demande initialisation de tous ses modules spécifiques de surveillance MS1 à MSt paramétrés en mode esclave, associés afin de provoquer une initialisation des métadonnées des modules esclaves et que l'ensemble des métadonnées mémorisées restent toujours synchronisées avec le temps du module maître.

Apparaissent également sur l'organigramme de la figure 2, des fonctions relatives à la gestion des enregistrements dans l'unité mémoire globale UM_G du contrôleur C en fonction des paramètres de fonctionnement du module spécifique de surveillance MSy. Une unité de saturation US vérifie si la taille mémoire maximale allouée aux métadonnées dans l'unité mémoire globale UM_G, dépendant du nombre d'enregistrements fixés par l'utilisateur, est atteinte ou non. « x » est un index sur les enregistrements des métadonnées, incrémenté par l'unité mémoire globale UM_G du contrôleur C de 1 en 1, à chaque enregistrement d'une nouvelle métadonnée et ce pour « x » variant de 0 à « p » où p correspond à une valeur limite. Si la limite « p » n'est pas atteinte (US : x=p => Non), l'unité d'enregistrement UE enregistre les métadonnées dans l'unité mémoire globale UM_G du contrôleur C, à l'index suivant x+1, à la suite des métadonnées précédemment enregistrées. Lorsque la limite « p » est atteinte (US : x=p => Oui), une unité de rotation UR vérifie si l'option écrasement des métadonnées, ou mode « wrap », a été choisie par l'utilisateur (UR = 1). Si cette option de rotation a été choisie, alors l'unité mémoire globale UM_G initialise l'index (UM_G MSy : x=0) afin que l'unité d'enregistrement UE enregistre les nouvelles métadonnées du tour de cycle instantané TCi sur les métadonnées enregistrées initialement à l'emplacement 0 de l'unité mémoire globale UM_G en écrasant, ou en ré-écrasant les fois suivantes, les anciennes métadonnées présentes. Si cette option n'a pas été choisie, alors l'unité mémoire globale UM_G est pleine, l'unité d'enregistrement UE stoppe les enregistrements des métadonnées et l'exécution du code programme unique du module générique de surveillance MG est en attente d'une demande d'initialisation, d'une augmentation de la taille mémoire ou d'une validation du mode « wrap ».

Etant donné que les modules de surveillance MS1 à MSt peuvent être implantés par le programmeur dans n'importe quelle zone du programme utilisateur, et de préférence au plus près de l'écriture des variables V1 à Vt à surveiller, soit après l'écriture de chacune desdites variables dans ledit programme utilisateur et de préférence immédiatement après leur écriture, ils effectuent une surveillance permanente de l'évolution des variables V1 à Vt, en temps réel, en toute transparence pour l'installation industrielle et sans incidence sur son fonctionnement, lorsque le nombre de modules de surveillance implantés est cohérent avec les performances du contrôleur C et les contraintes de temps de cycle de l'installation industrielle. L'utilisateur dispose de cette façon à tout moment de l'évolution de ces variables V1 à Vt surveillées pour expertiser précisément le comportement d'un organe ou d'une fonction de l'installation industrielle en fonction de leur évolution. De plus, ce procédé de surveillance est particulièrement rapide à mettre en œuvre. En effet, l'intégration du module générique de surveillance MG, dans le logiciel constructeur ainsi que l'intégration des modules de surveillance MS1 à MSt au sein même du programme utilisateur ne prennent en général que quelques minutes. Dans le cas d'un nombre important de variables V1 à Vt à surveiller, le logiciel d'expertise offre des outils, au travers d'une fonction « LINE », pour générer automatiquement le code programme des modules spécifiques de surveillance MSy afin de les importer automatiquement dans le programme utilisateur du contrôleur C en quelques clics, pour réduire considérablement le temps de programmation desdits modules MSy et répartir les variables V1 à Vt à surveiller sur chaque module MSy suivant une classification choisie par l'utilisateur. Le logiciel d'expertise propose également de détecter automatiquement toutes les autres variables qui sont liées aux changements d'état de chaque variable Vn surveillée, afin d'intégrer dans les modules spécifiques de surveillance MSy toutes les autres variables dépendantes utiles et impliquées dans l'analyse d'une panne. Ces solutions de recherche et de sélection des variables à surveiller sont inédites et très efficaces.

L'appareil d'expertise permet en outre une analyse et une expertise des métadonnées plus performantes que n'importe quelle autre méthode usuelle, grâce à ses outils de recherche, de sélection ou encore de tri des résultats, optimisés encore par le fait que les métadonnées ne contiennent que les changements d'états des variables et aucune autre mesure inutile.

Outre l'enregistrement des variables V1 à Vt, l'implantation des modules spécifiques de surveillance MS1 à MSt dans les différentes tâches du contrôleur C permet de disposer d'un outil d'expertise et de mesure du fonctionnement de l'ordonnancement des tâches du contrôleur C. La mesure de variables dédiées V1 à Vt évoluant à chaque tour de cycle dans chaque tâche permet également de visualiser graphiquement sous forme de créneau le temps réel d'exécution de chaque tâche (voir exemple V3 dans la figure 5). Il est ainsi possible de mieux comprendre et d'ajuster au plus juste les caractéristiques de chaque tâche ou par exemple pour comprendre et optimiser la fréquence de lecture et d'écriture des Entrées/Sorties avec un système tiers dans chacune des tâches.

Comme déjà évoqué, le mode de fonctionnement de chaque module spécifique de surveillance MS1 à MSt est paramétrable par l'utilisateur au moyen d'une unité de paramétrage UP (non représentée sur les figures). L'utilisateur peut, à tout instant et ce même pendant le fonctionnement du contrôleur C et de l'installation industrielle, activer ou désactiver la surveillance des variables V1 à Vn attribuées à chaque module, ou encore initialiser les métadonnées de l'unité mémoire globale UM_G du contrôleur C correspondant aux variables V1 à Vn de ce module MSy, avec l'entrée de contrôle I décrite précédemment. A l'aide des entrées de contrôle M et A, il est possible de suspendre puis de reprendre les enregistrements sans perte des enregistrements déjà effectués, à partir de n'importe quelle commande interne ou externe au contrôleur C.

Il est également possible de paramétrer, ou d'ajuster à tout instant, le nombre d'enregistrements limite « p » pour chaque module spécifique de surveillance MS1 à MSt comme évoqué plus haut. Cette valeur limite est à définir par l'utilisateur en fonction de l'importance de l'évolution prévisible des variables V1 à Vt qu'il souhaite surveiller. Lorsque cette valeur limite « p » est atteinte, l'utilisateur peut choisir entre:
- arrêter l'enregistrement des nouvelles métadonnées issues des variables V1 à Vt surveillées et indiquer que l'unité mémoire globale UM_G du contrôleur C est saturée (OKFULL), ou
- enregistrer les nouvelles métadonnées issues des variables V1 à Vt surveillées en écrasant, ou en ré écrasant, les métadonnées précédemment enregistrées. Ce mode de fonctionnement, paramétrable par l'utilisateur, est appelé mode « tournant » ou mode « wrap ». Il permet de ne jamais interrompre l'enregistrement des métadonnées et ainsi de toujours disposer de plusieurs minutes, heures, jours, semaines, etc...de mémorisation de l'évolution des variables V1 à Vt enregistrée dans le contrôleur C par l'unité d'enregistrement UE dans l'unité mémoire globale UM_G du contrôleur C. Cette durée d'enregistrement est fonction du paramétrage du nombre d'enregistrements souhaités et de la fréquence des changements d'état des variables V1 à Vn surveillées par le module spécifique de surveillance MSy correspondant. Plus la mémoire déclarée sera importante et plus le nombre de changements d'état sera faible, plus la durée d'enregistrements sera importante. Cependant, un enregistrement infini des métadonnées est possible si l'utilisateur effectue périodiquement une sauvegarde du programme du contrôleur C, incluant les métadonnées.

Il est par ailleurs aisé de faire évoluer la solution actuelle afin d'effectuer ces enregistrements automatiquement via le logiciel d'expertise dédié, par exemple lorsque l'unité de saturation US détecte une saturation de la mémoire allouée par l'utilisateur, de telle sorte à sauvegarder les métadonnées dans des fichiers de données externes. Ceci est possible au travers d'une fonction « REMOTE » du logiciel d'expertise dédié au contrôleur C. Le regroupement des métadonnées dans une zone globale commune, réalisée par les modules spécifiques de surveillance MS1 à MSt offre par ailleurs la possibilité d'effectuer ces sauvegardes en un temps extrêmement plus performant qu'un système externe classique, pour lequel les variables sont dispersées dans le contrôleur C, nécessitant alors de multiples requêtes de lecture distinctes.

Chaque module spécifique de surveillance MSy dispose en outre d'une option paramétrable par l'utilisateur qui lui permet de définir le mode d'enregistrement des données temporelles T0 à Tj des variables V1 à Vn surveillées, à savoir :
- mode « autonome » dans lequel, à chaque changement d'état d'une variable V1 à Vn, l'unité d'horodatage UH lit le temps interne Tj à partir de l'horloge du contrôleur C correspondant au tour de cycle instantané TCi, et l'unité d'enregistrement UE enregistre ce temps instantané Tj lu associé au changement d'état d'une ou de plusieurs variables V1 à Vn détecté par le module de contrôle UC,
- mode « maître » dans lequel, à chaque nouveau tour de cycle TCi, l'unité d'horodatage UH lit le temps interne Tj à partir de l'horloge du contrôleur C et l'unité d'enregistrement UE enregistre ce temps instantané Tj lu et le communique à ses modules spécifiques de surveillance MS1 à MSt associés en mode « esclave », pour utiliser ce temps de référence en l'associant au changement d'état des variables V1 à Vn détecté par son unité de contrôle UC comme dans le mode « autonome »,
- mode « esclave » dans lequel l'unité d'horodatage UH utilise le temps instantané Tj transmis par son module spécifique de surveillance MSy paramétré en mode « maître » qui lui a été associé et non directement le temps interne instantané de l'horloge du contrôleur C. L'unité d'enregistrement UE enregistre alors ce temps reçu de son module maître pour l'associer au changement d'état des variables V1 à Vn détecté par son unité de contrôle UC.

Cette notion de mode « maître » / mode « esclave » est intéressante si l'on souhaite éviter les décalages de temps dans l'affichage de variables V1 à Vt évoluant dans le même tour de cycle TC et surveillées par plusieurs modules spécifiques de surveillance MS1 à MSt localisés à des endroits différents dans le programme utilisateur du contrôleur C. Pour illustrer ce propos, un changement d'état d'une même variable V1 surveillée par deux modules spécifiques de surveillance MS1 et MS2, implantés respectivement en début et en fin de programme, permet d'obtenir deux mesures temporelles distinctes. La mesure temporelle faite par le module spécifique de surveillance MS2 est dans ce cas égale à celle effectuée par le module spécifique de surveillance MS1, à laquelle il faut ajouter le temps de cycle du contrôleur C nécessaire à son activité entre l'exécution de MS 1 et MS2. Cette précision temporelle est toutefois rarement nécessaire, l'important étant davantage de contrôler la séquence des évènements les uns par rapport aux autres. Les différents temps mesurés pour une même variable V1 à Vn surveillée à différents endroits dans le programme utilisateur démontrent en revanche les possibilités de la précision de mesure du procédé et de l'équipement de surveillance de l'invention. Cette précision est souvent très utile pour mesurer avec exactitude le temps de cycle TC du contrôleur pour l'exécution d'une seule ou de plusieurs tâches, de routines, d'instructions, etc.

L'exactitude et la précision de la mesure temporelle d'un changement d'état d'une variable V1 à Vn à l'aide d'un module spécifique de surveillance MSy dépend de ce fait de l'endroit où se trouve ledit module spécifique de surveillance dans le programme utilisateur par rapport à la ligne de programme qui commande ladite variable V1 à Vn. Plus le module spécifique de surveillance MSy est proche de la ligne de programme qui pilote cette variable V1 à Vn, plus la mesure du temps du changement d'état de cette variable sera exacte. Cette précision est limitée volontairement à 1ms pour réduire la taille des métadonnées dans l'unité mémoire globale UM_G, mais la création d'un module générique de surveillance MG avec une précision de 1microseconde est aisément envisageable dans le cas où cela est nécessaire. Exemple : mesure du temps d'exécution d'une seule instance MSy.

Si cette différence temporelle évoquée précédemment représente un inconvénient pour l'expertise de certains résultats, puisque cela génère des métadonnées dans des temps très proches, alors il convient d'utiliser les modes « maître/esclave » pour éviter ce phénomène. L'intérêt de ce mécanisme « maître/esclave » est illustré par l'exemple de la figure 3 dans lequel une même variable V1 est surveillée par trois modules de surveillance MS1, MS2 et MS3 paramétrés respectivement en modes « maitre », « esclave » et « autonome ». L'association d'un module spécifique de surveillance MS2 paramétré en mode « esclave » avec un module spécifique de surveillance MS 1 paramétré en mode « maître » permet d'obtenir une représentation graphique identique pour une même variable V1 surveillée quel que soit l'emplacement desdits modules dans le programme utilisateur, puisque l'horodatage lu par le module spécifique de surveillance MS2 paramétré en mode « esclave » est synchronisé, dans un même tour de cycle TC, avec celui du module spécifique de surveillance MS1 paramétré en mode « maître » permettant ainsi de ne pas créer plusieurs métadonnées dans des temps très proches pour des variables qui évoluent dans un même tour de cycle TC, mais au contraire de mémoriser un temps rigoureusement identique. On constate donc, sur les illustrations de la figure 3, que la représentation graphique de cette même variable V1 surveillée par le module spécifique de surveillance MS3 paramétré en mode « autonome » est légèrement décalée d'un intervalle temps Δt par rapport à celle du module spécifique de surveillance MS1 paramétré en mode « maître ». Cet intervalle temps Δt correspond à la durée de traitement du programme utilisateur du contrôleur C entre l'exécution des modules spécifiques de surveillance MS1 et MS3, qui peut atteindre plusieurs millisecondes, ce qui n'est pas le cas entre les modules spécifiques de surveillance MS1 et MS2. Pour faire disparaître également si nécessaire ce phénomène à l'affichage des données, lors de l'expertise, un outil complémentaire de « compactage » des données propose dans le logiciel d'expertise dédié de regrouper les changements d'état des variables selon un temps de filtrage choisi par l'utilisateur. Par défaut on pourra ainsi par exemple regrouper toutes les métadonnées existant dans un intervalle de temps paramétrable, prédéfini à 10 millisecondes par défaut.

Parmi les autres paramètres de fonctionnement que l'utilisateur peut sélectionner pour chacun des modules spécifiques de surveillance MSlà MSt qu'il décide d'implanter dans le programme utilisateur, on peut citer à titre d'exemple :
- Le paramètre « PAnotime » permettant d'inhiber si nécessaire l'enregistrement des données temporelles T0 à Tj dans les métadonnées à chaque changement d'état ou à chaque évolution des variables V1 à Vn surveillées. Cette option permet de réduire considérablement la taille de la mémoire utilisée dans l'unité mémoire globale UM_G du contrôleur C dans le cas où l'utilisateur souhaite visualiser seulement l'évolution des variables sans nécessairement disposer de l'horodatage.
- Le paramètre « PAinhib » permettant d'inhiber la surveillance d'une ou de plusieurs variables V1 à Vn surveillées. Cette option permet également d'optimiser la mémoire utilisée dans l'unité mémoire globale UM_G du contrôleur C et le temps d'exécution du module spécifique de surveillance MS 1 à MSt concerné en désactivant la surveillance de certaines variables V1 à Vn. L'état ou l'évolution de ces variables inhibées ne sera alors mémorisé dans les métadonnées que lorsque l'état d'une autre variable V1 à Vn non inhibée changera ou évoluera.

Pour extraire les métadonnées ainsi créés par les modules spécifiques de surveillance MS1 à MSn et enregistrées dans l'unité mémoire globale UM_G du contrôleur C, l'utilisateur connecte physiquement une console de programmation adéquate pour ce type de contrôleur C et active une fonction de sauvegarde dans le logiciel du constructeur, qui sauvegarde simultanément les états logiques de toutes les variables présentes dans le contrôleur C à cet instant. Cette fonction va ainsi permettre de sauvegarder l'ensemble du programme utilisateur, incluant une lecture complète de toutes les métadonnées enregistrées dans l'unité mémoire globale UM_G du contrôleur C de l'index 0 à l'index « p ». Ces métadonnées sont ensuite exportées dans un fichier, dans un format standard, tel que par exemple le format XML, pour être traitées par un logiciel d'expertise dédié, développé conjointement aux modules spécifiques de surveillance MS1 à MSt et localisé dans un appareil d'expertise dédié. La fonction sauvegarde peut être effectuée selon les besoins définis par l'utilisateur ou suite à un incident par exemple de l'installation. Lorsque la sauvegarde est terminée, l'utilisateur peut déconnecter sa console de programmation pour expertiser et interpréter de manière différée les métadonnées sauvegardées et lues à l'aide de l'appareil d'expertise dédié, et ce grâce aux outils mis à disposition dans le logiciel d'expertise dédié aux modules spécifiques de surveillance MS1 à MSt.

Le logiciel d'expertise dédié permet d'exploiter toutes les métadonnées enregistrées, afin de visualiser précisément les évolutions de toutes les variables V1 à Vt surveillées du contrôleur C et de l'installation industrielle qu'il pilote. Ce logiciel d'expertise dédié est unique et commun pour tous les programmes utilisateur de plusieurs contrôleurs C à expertiser. Ainsi, il fournit une interface graphique conviviale et adaptée pour visualiser les enregistrements des métadonnées, localiser très rapidement un dysfonctionnement ou encore effectuer une mesure temporelle entre les événements. Il propose à l'utilisateur des outils efficaces de traitement des métadonnées lui permettant ainsi d'effectuer des dépannages, des mesures, de la traçabilité et de la surveillance du contrôleur C et de l'installation industrielle pilotée par ce contrôleur. Il permet en outre de regrouper et de croiser les métadonnées prélevées sur différents contrôleurs C. Ainsi, il est possible de prélever autant de variables V1 à Vt dans l'un et l'autre des contrôleurs C pour les fusionner dans un fichier de données permettant de visualiser très rapidement l'ensemble des métadonnées, ce qu'aucun équipement de surveillance connu à ce jour ne permet de réaliser aussi aisément et rapidement avec une telle précision. Pour ce faire, il est préférable que l'horodatage des contrôleurs C concernés soit identique ou le plus proche possible pour l'exactitude des mesures. Ce regroupement est par ailleurs très efficace pour obtenir par exemple un graphique des échanges entre ces contrôleurs C lorsqu'ils communiquent entre eux ou partage un processus commun.

Le logiciel d'expertise dédié détecte automatiquement la présence de tous les modules spécifiques de surveillance MS1 à MSt présents dans un programme utilisateur du contrôleur C pour surveiller toutes les variables V1 à Vt binaires, numériques et complexes associées. Il propose ainsi à l'utilisateur la liste de tous ces modules spécifiques de surveillance MS1 à MSt à visualiser. Après sélection du module spécifique de surveillance MSy souhaité, les évolutions des métadonnées correspondantes et enregistrées par ledit module sont alors affichées instantanément à l'écran de l'appareil d'expertise dédié pour expertise, y compris lors du changement de module à afficher. Il permet également de trier les variables pour un même module spécifique de surveillance MSy mais aussi entre les modules d'un ou de plusieurs contrôleurs C via des listes personnalisées. Cette fonction, nommée « MERGE », permet de sauvegarder, de restituer, de réutiliser, tous types de scénarios de fonctionnement, de panne, etc., y compris les mesures et indicateurs temporels positionnés sur l'écran lors de l'analyse des graphiques.

Le logiciel d'expertise dédié comporte également une fonctionnalité graphique qui permet à l'utilisateur de choisir entre deux modes d'affichage et de pouvoir basculer instantanément entre ces deux modes, présentant tous deux des avantages et des inconvénients.

L'utilisateur peut sélectionner un mode d'affichage sans base de temps linéaire. L'avantage majeur de ce mode d'affichage est de visualiser uniquement les changements d'états de toutes les variables V1 à Vn correspondant audit module spécifique de surveillance MSy analysé, sans tenir compte du temps entre deux évènements pour définir la base de temps d'affichage Ce mode d'affichage permet ainsi de visualiser sur un même écran des évolutions de variables V1 à Vn qui ont pu avoir lieu dans un espace de temps important ou très différents : plusieurs microsecondes, millisecondes, secondes, minutes, heures, jours, etc. pour visualiser et comprendre l'enchaînement des événements. Une fonction zoom permet par ailleurs de concentrer encore davantage le nombre d'événements visibles à l'écran. Toutefois, cette représentation ne permet pas de comparer visuellement la durée des créneaux temporels visibles sur l'écran puisqu'il n'y pas d'échelle de temps.

Il peut donc pour remédier à cela également sélectionner un mode d'affichage avec une base de temps linéaire paramétrable. L'avantage de ce mode d'affichage est de pouvoir comparer visuellement la durée des créneaux temporels visibles à l'écran. L'inconvénient majeur de ce mode d'affichage est de visualiser simultanément peu d'événements sur un même écran, générant un manque de lisibilité globale des événements. Cette double fonctionnalité instantanée de mode d'affichage n'est d'ailleurs pas connue à ce jour sur d'autres appareils d'analyse existants de ce type.

L'équipement de surveillance et d'expertise selon l'invention peut également être utilisé pour des applications préventives de dépannage. Dans ce cas, il est très intéressant pour l'utilisateur d'implanter et de standardiser l'utilisation de certains modules spécifiques de surveillance MS1 à MSt dans le programme utilisateur d'un contrôleur C dès sa conception pour surveiller les principales variables stratégiques V1 à Vt des installations industrielles qui seront pilotées par ledit contrôleur C, afin de disposer d'un système préventif de surveillance sans attendre l'apparition d'un aléa dans ladite installation industrielle pour implanter cette surveillance. Cette intégration des modules spécifiques de surveillance MS1 à MSt dès la conception du programme utilisateur permet ainsi de ne pas ajouter ultérieurement de système externe de mesure et de ne pas risquer de perturber ultérieurement le fonctionnement d'une installation industrielle déjà en fonctionnement s'ils ont toujours fait partie intégrante du programme. Suite à un dysfonctionnement, l'utilisateur pourra alors prélever puis analyser l'évolution d'une ou de plusieurs variables V1 à Vt, rechercher et localiser l'endroit du programme utilisateur à l'origine de ces défauts pour ainsi expertiser les comportements anormaux d'une installation industrielle et déterminer l'origine d'une défaillance de cette installation. Il peut enregistrer et conserver des scénarios de fonctionnement ou de pannes. Il peut filtrer l'évolution de certaines variables V1 à Vt sur une période de temps. Il peut visualiser sous forme de chronogrammes le comportement des variables V1 à Vt mémorisées. Il peut créer des listes personnalisables et réutilisables de variables V1 à Vt pour un incident donné. Il peut afficher les variables V1 à Vt avec une échelle de temps linéaire, ou avec une base de temps dynamique qui s'adapte automatiquement avec le temps d'apparition de chaque événement, comme expliqué précédemment. Cette solution permet de restreindre le nombre des mesures visualisables des variables V1 à Vt surveillées en affichant seulement les changements d'états des variables. On peut citer à titre d'exemple : *si une variable évolue 10 fois sur 24h, seuls les 10 changements d'états successifs seront regroupés sur l'écran afin de ne pas devoir scruter les données sur 24h.*

L'outil graphique du logiciel d'expertise offre, au travers d'une fonction « TRACK », des fonctionnalités d'affichage pour le tri des variables V1 à Vt, le filtrage des variables sur un temps donné, l'ordre d'affichage des variables V1, V2 ou V2, V1, la couleur d'affichage du graphique de chaque variable, l'accès instantané à n'importe quel changement d'état, la suppression des mesures parasites indésirables, etc., l'archivage de scénarios de pannes ou de production, la création et la réutilisation de liste de variables entre plusieurs modules spécifiques de surveillance MS1 à MSt, etc. A titre d'exemple, on peut citer : Si MS1 surveille V1 à V15 et MS2 surveille V16 à V31 alors on peut créer une liste qui ne contient que V1, V25, V30 ou V2, V4, V8, V9 et afficher l'une de ses listes à l'écran.

Le logiciel d'expertise permet la mesure temporelle des événements. L'utilisateur peut notamment déterminer avec précision chaque évolution de n'importe quelle variable V1 à Vt surveillée en temps réel. Il peut effectuer une signature temporelle du fonctionnement de l'installation industrielle en mémorisant un graphique sur une période donnée pour en obtenir une référence de fonctionnement. Il peut mesurer tous les temps de cycle d'une tâche, ou d'un sous-programme, le temps de fonctionnement d'un actionneur ou d'un équipement de la partie opérative, le temps entre deux évènements quelconques, optimiser le paramétrage et le nombre des tâches à utiliser, ces exemples n'étant pas limitatifs.

Le logiciel d'expertise permet également de réaliser la traçabilité et la surveillance de certains événements. L'utilisateur peut notamment surveiller et calculer des événements, le nombre d'interventions des opérateurs, le nombre de défauts et d'interventions, etc. Il peut réaliser graphiquement le suivi des données de production ou de traçabilité des produits d'une installation. Il peut encore effectuer des mesures de rendement ou de disponibilités d'une installation industrielle.

Ce logiciel d'expertise dispose d'une option supplémentaire de fonctionnement, qui permet de connecter l'appareil d'expertise dédié au contrôleur C et de travailler en ligne. Cette fonctionnalité est opérationnelle sous réserve que le logiciel dédié soit installé sur un ordinateur qui contient déjà un logiciel de communication compatible avec le contrôleur C à surveiller. Cette fonctionnalité permet ainsi de visualiser sur un écran d'ordinateur, l'évolution dynamique d'une ou plusieurs variables V1 à Vt surveillées en fonction du temps, à partir des métadonnées enregistrées. La solution proposée avec l'appareil d'expertise déporté selon l'invention, tel que décrit ci-dessus, élimine les inconvénients évoqués précédemment en référence aux systèmes d'analyse externes connus, excepté le fait de devoir connecter une console, et réduit considérablement le nombre de requêtes de lecture des variables vers le contrôleur C. En effet, le logiciel d'expertise effectue dans ce cas périodiquement la lecture des métadonnées enregistrées précédemment par les modules spécifiques de surveillance MS1 à MSt dans le contrôleur C mais seulement pour les quelques variables V1 à Vt présentes à l'écran, et que l'utilisateur souhaite visualiser, soit par exemple un maximum de seize variables simultanément, ce chiffre n'étant pas limitatif. Le logiciel d'expertise dispose en outre d'un réglage de cette périodicité de lecture des variables V1 à Vt, pour éliminer quasiment les risques de perturbation du contrôleur C comme un système externe, et ne jamais perturber l'exactitude des mesures en temps réel qui sont toujours effectuées par les modules spécifiques de surveillance MS1 à MSt présents dans le programme utilisateur dudit contrôleur C. Une période de temps plus élevée de cette période de scrutation du logiciel d'expertise se traduit simplement par un ralentissement du rafraîchissement des variables visualisées à l'écran par l'utilisateur. Mais quel que soit le réglage de ce temps de lecture des variables, il ne remet pas en cause la pertinence ni l'exactitude des résultats obtenus, puisque l'ensemble des variables V1 à Vt surveillées continuent sans cesse d'être mémorisées en temps réel dans l'unité mémoire globale UM_G interne du contrôleur C via les modules spécifiques de surveillance MS1 à MSt et que le logiciel d'expertise interroge uniquement les métadonnées déjà enregistrées lors des tours de cycle TC précédents et ce jusqu'au tour de cycle juste antérieur TCi-1.

Ce logiciel d'expertise comporte en outre, au travers d'une fonction « CHECK », d'autres outils complémentaires très ergonomiques et efficaces destinés à l'assistance technique du programmeur pour faciliter et optimiser au maximum la mise au point des installations automatisées, tels que par exemple :
- l'analyse et le contrôle des programmes utilisateur, ce qui est utile par exemple dans le cadre de l'invention, pour effectuer des contrôles de cohérence du paramétrage des modules MSy, la présence d'erreurs d'utilisation ou d'oublis de paramétrage, le calcul du nombre de variable surveillées, l'évaluation du temps de cycle nécessaire, etc.
- la lecture ou l'écriture des états logiques de variables dans le contrôleur C via un fichier de données type Excel, pour effectuer périodiquement et automatiquement des sauvegardes et restituer les métadonnées, d'un contexte de production, etc.

### Possibilités d'application industrielle :

Il ressort clairement de cette description que l'invention permet d'atteindre les buts fixés, à savoir un procédé de surveillance et d'expertise performant mis en œuvre par un équipement simple, très rapide à intégrer et à paramétrer, dont l'analyse des résultats n'est pas réservée uniquement aux experts automaticiens du contrôleur C mais accessibles aux autres utilisateurs de l'installation, sans quasiment pénaliser le fonctionnement du contrôleur C et permettant par un simple relevé de données d'évaluer le comportement temporel du contrôleur C et par la même occasion le comportement temporel de l'installation industrielle qu'il pilote, et de détecter des pannes et des dysfonctionnements sporadiques de fonctionnement de ladite installation industrielle afin de proposer des mesures correctives adaptées aussi bien dans le programme utilisateur du contrôleur C que dans l'installation industrielle. La rapidité, la simplicité de mise en œuvre puis la pertinence, la précision des résultats obtenus et la facilité d'expertise démontrent l'intérêt de l'invention pour la surveillance des contrôleurs programmables et des installations industrielles qu'ils pilotent.

De plus, ce procédé de surveillance et d'expertise mis en œuvre par ledit équipement de l'invention permettent d'effectuer des analyses et/ou expertises complémentaires tels que :
- Le diagramme de cycle de l'installation industrielle appelé « signature machine »,
- La mesure temporelle détaillée du fonctionnement de n'importe quel des organes pilotés par l'automatisme,
- La mesure du temps de cycle du contrôleur C,
- Le calcul du rendement et de la disponibilité de l'installation industrielle (calcul des temps d'arrêt, etc.),
- L'état de production de l'installation industrielle (nombre de pièces défectueuses par exemple),
- Etc.

## Revendications

1. Procédé de surveillance et d'expertise d'une installation industrielle pilotée par un contrôleur (C) programmable au moyen d'instructions programmées dans un programme utilisateur dudit contrôleur (C), ledit programme utilisateur comportant des variables internes utilisées pour coordonner l'exécution desdites instructions à chaque tour de cycle (TCi) dudit contrôleur (C) répété indéfiniment permettant le fonctionnement d'au moins une partie de ladite installation industrielle, procédé **caractérisé en ce que** l'on implante au moins un module spécifique de surveillance (MSy) dans ledit programme utilisateur du contrôleur (C) à au moins un emplacement choisi, l'on attribue audit module spécifique de surveillance (MSy) au moins une variable (V1 à Vn) interne à surveiller, l'on implante ledit au moins un module spécifique de surveillance (MSy) après l'écriture de ladite au moins une variable (V1 à Vn) à surveiller dans ledit programme utilisateur, et de préférence immédiatement après son écriture, ladite au moins une variable (V1 à Vn) à surveiller étant choisies dans le groupe comprenant les variables booléennes, les variables numériques, les variables complexes de type chaîne de caractères, et **en ce que**, pendant l'exécution des instructions dans un tour de cycle instantané (TCi), ledit au moins un module spécifique de surveillance (MSy), lorsqu'il est activé et exécuté par ledit programme utilisateur, lit en temps réel par une unité de lecture (UL) l'état logique de ladite au moins une variable (V1 à Vn) dans ledit tour de cycle instantané (TCi), compare par une unité de contrôle (UC) l'état logique de ladite au moins une variable (V1 à Vn) dudit tour de cycle instantané (TCi) avec l'état logique de cette même variable (V1 à Vn) du tour de cycle précédent (TCi-1) préalablement enregistré, et uniquement en cas de changement dudit état logique, lit par une unité d'horodatage (UH) des données temporelles (Tj) correspondant au tour de cycle instantané (TCi) et enregistre le nouvel état logique lu de ladite au moins une variable (V1 à Vn) associé auxdites données temporelles (Tj) dudit tour de cycle instantané (TCi) formant au moins une métadonnée dans une unité de mémoire globale (UM_G) du contrôleur (C) par une unité d'enregistrement (UE), et **en ce que** l'on analyse au moyen d'un appareil d'expertise dédié ladite au moins une métadonnée enregistrée dans ladite unité mémoire globale (UM_G) du contrôleur (C) pour visualiser le fonctionnement en temps réel dudit programme utilisateur et/ou de ladite installation industrielle et identifier un éventuel dysfonctionnement dans ledit programme utilisateur et/ou ladite installation industrielle.

2. Procédé selon la revendication 1, **caractérisé en ce que** les données temporelles (Tj) lues par l'unité d'horodatage (UH) dudit module spécifique de surveillance (MSy) correspondent au temps réel d'une horloge interne dudit contrôleur (C), lorsque ledit module spécifique de surveillance est un module paramétré en mode « autonome » ou en mode « maître », ou au temps lu par un autre module spécifique de surveillance, lorsque ledit module spécifique de surveillance est un module paramétré en mode « esclave » et est associé à cet autre module spécifique de surveillance paramétré en mode « maître ».

3. Procédé selon l'une quelconque des revendications précédentes, **caractérisé en ce que** l'on attribue audit au moins un module spécifique de surveillance (MSy) un nombre (n) de variables (V1 à Vn) à surveiller, et **en ce que** l'unité de lecture (UL) dudit module spécifique de surveillance (MSy) lit l'état logique de chacune desdites variables (V1 à Vn) surveillées dans ledit tour de cycle instantané (TCi) et enregistre dans ladite unité mémoire globale (UM_G) dudit contrôleur (C) l'état logique de toutes les variables (V1 à Vn) surveillées dans ledit tour de cycle instantané (TCi) si l'état logique d'au moins une desdites variables (V1 à Vn) surveillées a changé.

4. Procédé selon l'une quelconque des revendications précédentes, **caractérisé en ce que** l'on implante plusieurs modules spécifiques de surveillance (MS1 à MSt) à différents emplacements choisis dans ledit programme utilisateur du contrôleur (C), et l'on attribue à chaque module spécifique de surveillance (MSy où y est compris entre 1 et t) une ou plusieurs variables (V1 à Vn) à surveiller.

5. Procédé selon la revendication 1, **caractérisé en ce que**, pour analyser ladite au moins une métadonnée enregistrée dans l'unité mémoire globale (UM_G) dudit contrôleur (C) et identifier un éventuel défaut dans ledit programme utilisateur et/ou ladite installation industrielle, l'on récupère dans ledit appareil d'expertise dédié ladite au moins une métadonnée enregistrée dans l'unité mémoire globale (UM_G) dudit contrôleur (C) et l'on procède à une analyse statique de ladite au moins une métadonnée hors ligne et de manière différée au moyen d'un logiciel d'expertise dédié, ou l'on connecte ledit appareil d'expertise dédié audit contrôleur (C) pour procéder à une analyse dynamique de ladite au moins une métadonnée en ligne au moyen dudit logiciel d'expertise dédié.

6. Procédé selon la revendication 2, **caractérisé en ce que** l'on paramètre par une unité de paramétrage (UP) le fonctionnement dudit module spécifique de surveillance (MSy) au moyen d'au moins un paramètre choisi dans le groupe comprenant un mode « marche » dans lequel ledit module spécifique de surveillance est activé soit manuellement par une commande externe, soit automatiquement par ledit programme utilisateur, un mode « arrêt » dans lequel ledit module spécifique de surveillance est désactivé, un mode « initialisation » dans lequel ledit module spécifique de surveillance remet à zéro les métadonnées correspondant aux variables (V1 à Vn) surveillées et enregistrées dans ladite unité mémoire globale (UM_G) dudit contrôleur (C), le mode « autonome » ou le mode « maître » dans lequel ledit module spécifique de surveillance lit le temps réel de l'horloge interne dudit contrôleur (C), le mode « esclave » dans lequel ledit module spécifique de surveillance utilise le temps lu par un autre module spécifique de surveillance paramétré en mode « maître ».

7. Procédé selon la revendication 3, **caractérisé en ce que** l'on inhibe au moins une des variables (V1 à Vn) dites surveillées par ledit module spécifique de surveillance (MSy), et **en ce que** l'état logique de ladite au moins une variable inhibée ne sera enregistré que lorsque l'état logique d'au moins une autre variable non inhibée changera.

8. Procédé selon l'une quelconque des revendications précédentes, **caractérisé en ce que** l'on conçoit un module générique (MG) dédié à la surveillance dans ledit programme utilisateur dudit contrôleur (C) sous la forme d'un code programme unique comportant au moins lesdites unités de lecture (UL), de contrôle (UC), d'horodatage (UH), d'enregistrement (UE) et de paramétrage (UP), et **en ce que** l'on crée chaque module spécifique de surveillance (MSy) sous la forme d'un module programme exécutable dudit module générique (MG) dédié à la surveillance implanté dans ledit programme utilisateur.

9. Equipement de surveillance et d'expertise d'une installation industrielle pilotée par un contrôleur (C) programmable au moyen d'instructions programmées dans un programme utilisateur dudit contrôleur, ledit programme utilisateur comportant des variables internes utilisées pour coordonner l'exécution desdites instructions à chaque tour de cycle (TC) dudit contrôleur (C) répété indéfiniment permettant le fonctionnement d'au moins une partie de ladite installation industrielle, équipement **caractérisé en ce qu'**il met en œuvre le procédé de surveillance et d'expertise selon l'une quelconque des revendications précédentes et comporte à cet effet au moins un module spécifique de surveillance (MSy) agencé pour être implanté à au moins un emplacement choisi dans ledit programme utilisateur du contrôleur (C), ledit module spécifique de surveillance (MSy) comportant au moins une entrée à laquelle est attribuée au moins une variable (V1 à Vn) interne à surveiller, une unité de lecture (UL) agencée pour lire en temps réel l'état logique de ladite au moins une variable (V1 à Vn), lorsque ledit au moins un module spécifique de surveillance (MSy) est activé pendant l'exécution desdites instructions dans un tour de cycle instantané (TCi), une unité de contrôle (UC) agencée pour comparer l'état logique de ladite au moins une variable (V1 à Vn) dudit tour de cycle instantané (TCi) avec l'état logique de la même variable (V1 à Vn) du tour de cycle précédent (TCi-1) préalablement enregistré, une unité d'horodatage (UH) agencée pour lire des données temporelles (Tj) correspondant audit tour de cycle instantané (TCi), et une unité d'enregistrement (UE) agencée pour enregistrer le nouvel état logique lu de ladite au moins une variable (V1 à Vn) associé auxdites données temporelles (Tj) dudit tour de cycle instantané (TCi) pour former au moins une métadonnée dans une unité de mémoire globale (UM_G) dudit contrôleur (C) uniquement en cas de changement dudit état logique, et **en ce que** ledit équipement comporte en outre un appareil d'expertise dédié agencé pour analyser ladite au moins une métadonnée enregistrée dans ladite unité mémoire globale (UM_G) dudit contrôleur (C), visualiser le fonctionnement en temps réel dudit programme utilisateur et/ou de ladite installation industrielle, et identifier un éventuel dysfonctionnement dans ledit programme utilisateur et/ou ladite installation industrielle.

10. Equipement selon la revendication 9, **caractérisé en ce que** ledit au moins un module spécifique de surveillance (MSy) est un module paramétré en mode « autonome » ou en mode « maître » et ladite unité d'horodatage (UH) est agencée pour lire le temps réel (Tj) d'une horloge interne dudit contrôleur (C), ou en mode « esclave » et ladite unité d'horodatage (UH) est agencée pour lire le temps (Tj) fourni par un autre module spécifique de surveillance paramétré en mode « maître ».

11. Equipement selon l'une quelconque des revendications 9 et 10, **caractérisé en ce que** ledit au moins un module spécifique de surveillance (MSy) comporte un nombre (n) d'entrées auquel est attribué un nombre (n) de variables (V1 à Vn) à surveiller, **en ce que** ladite unité de lecture (UL) est agencée pour lire l'état logique de chacune desdites variables (V1 à Vn) dans ledit tour de cycle instantané (TCi) et **en ce que** l'unité d'enregistrement (UE) est agencée pour enregistrer dans ladite unité mémoire globale (UM_G) dudit contrôleur (C) l'état logique de toutes les variables (V1 à Vn) si l'état logique d'au moins une desdites variables surveillées a changé.

12. Equipement selon l'une quelconque des revendications 9 à 11, **caractérisé en ce qu'**il comporte plusieurs modules de surveillance (MS1 à MSt) implantés à différents emplacements choisis dans ledit programme utilisateur, et **en ce que** chaque module spécifique de surveillance (MSy) comporte une ou plusieurs entrées, à chaque entrée étant attribuée une variable (V1 à Vn) à surveiller.

13. Equipement selon la revendication 9, **caractérisé en ce que** ledit appareil d'expertise dédié comporte une unité mémoire dans laquelle ladite au moins une métadonnée enregistrée dans l'unité mémoire globale (UM_G) dudit contrôleur (C) est récupérée ainsi qu'un logiciel d'expertise dédié agencé pour traiter et représenter sous une forme graphique ladite au moins une métadonnée afin de visualiser le fonctionnement en temps réel dudit programme utilisateur et/ou de ladite installation industrielle, ledit appareil d'expertise dédié étant agencé pour procéder à une analyse statique de ladite au moins une métadonnée hors ligne et de manière différée, ou à une analyse dynamique de ladite au moins une métadonnée en ligne lorsqu'il est connecté audit contrôleur (C).

14. Equipement selon la revendication 10, **caractérisé en ce que** ledit module spécifique de surveillance (MSy) comporte une unité de paramétrage (UP) agencée pour paramétrer son fonctionnement au moyen d'au moins un paramètre choisi dans le groupe de paramètres comprenant une fonction « marche » dans laquelle ledit module spécifique de surveillance est activé soit manuellement par une commande externe, soit automatiquement sur conditions par ledit programme utilisateur, une fonction « arrêt » dans laquelle ledit module spécifique de surveillance est désactivé, une fonction « initialisation » par laquelle ledit module spécifique de surveillance remet à zéro dans ladite unité mémoire globale (UM_G) dudit contrôleur (C) ladite au moins une métadonnée enregistrée correspondant à ladite au moins une variable (V1 à Vn) surveillée, le mode « autonome » ou le mode « maître » dans lequel ledit module spécifique de surveillance lit le temps réel de l'horloge interne dudit contrôleur (C), le mode « esclave » dans lequel ledit module spécifique de surveillance utilise le temps (Tj) lu par un autre module spécifique de surveillance paramétré en mode « maître ».

15. Equipement selon l'une quelconque des revendications 9 à 14, **caractérisé en ce qu'**il comporte un module générique (MG) dédié à la surveillance constitué d'un code programme unique interne audit programme utilisateur dudit contrôleur (C) et comportant au moins lesdites unités de lecture (UL), de contrôle (UC), d'horodatage (UH), de paramétrage (UP) et d'enregistrement (UE), et **en ce que** chaque module spécifique de surveillance (MS1 à MSt) implanté dans ledit programme utilisateur est un module programme exécutable dudit module générique (MG) dédié à la surveillance.

## Patentansprüche

1. Verfahren zur Überwachung und Beurteilung des Betriebs einer Industrieanlage, die von einem programmierbaren Steuergerät (C) anhand von Anweisungen angesteuert wird, die in einem Benutzerprogramm dieses Steuergerätes (C) programmiert werden, wobei dieses Nutzerprogramm interne Variablen enthält, die zur Koordinierung der Ausführung dieser Anweisungen bei jeder unendlich oft wiederholten Zyklusumdrehung (TCi) dieses Steuergerätes (C) verwendet werden, die den Betrieb mindestens eines Teils dieser Industrieanlage erlaubt, wobei das Verfahren **dadurch gekennzeichnet ist, dass** mindestens ein spezifisches Überwachungsmodul (MSy) in diesem Nutzerprogramm des Steuergerätes (C) an mindestens einer ausgewählten Position implantiert wird, mindestens eine zu überwachende interne Variablen (V1 bis Vn) diesem spezifischen Überwachungsmodul (MSy) zugewiesen wird, dieses mindestens eine spezifische Überwachungsmodul (MSy) nach dem Schreiben dieser mindestens einen zu überwachenden Variablen (V1 bis Vn) im Nutzerprogramm implantiert wird und vorzugsweise unmittelbar, nachdem es geschrieben wurde, wobei diese mindestens eine zu überwachenden Variable (V1 bis Vn) aus der Gruppe ausgewählt wird, zu der die booleschen Variablen, die numerischen Variablen und die komplexen Variablen vom Typ Zeichenkette gehören, und dadurch, dass während der Ausführung der Anweisungen in einer augenblicklichen Zyklusumdrehung (TCi), dieses mindestens eine spezifische Überwachungsmodul (MSy), wenn es vom genannten Nutzerprogramm aktiviert und ausgeführt wird, in Echtzeit über eine Leseeinheit (UL) den Logikzustand der mindestens einen Variablen (V1 bis Vn) in dieser augenblicklichen Zyklusumdrehung (TCi) abliest, über eine Steuereinheit (UC) den Logikzustand dieser mindestens einen Variablen (V1 bis Vn) dieser augenblicklichen Zyklusumdrehung (TCi) mit dem zuvor registrierten Logikzustand derselben Variablen (V1 bis Vn) bei der vorherigen Zyklusumdrehung (TCi-1) vergleicht und nur bei einer Änderung dieses Logikzustandes, durch eine Zeitstempeleinheit (UH) temporäre Daten (Tj) liest, die der augenblicklichen Zyklusumdrehung (TCi) entsprechen und den neuen, abgelesenen Logikzustand dieser mindestens einen Variablen (V1 bis Vn), der mit diesen temporären Daten (Tj) dieser augenblicklichen Zyklusumdrehung (TCi) verbunden ist, die mindestens eine Metainformation in einer globalen Speichereinheit (UM_G) des Steuergerätes (C) bilden, durch eine Aufzeichnungseinheit (UE) aufzeichnet, und dadurch dass über ein spezielles Beurteilungsgerät die mindestens eine Metainformation, die in der globalen Speichereinheit (UM_G) des genannten Steuergerätes (C) aufgezeichnet ist, analysiert wird, um den Betrieb in Echtzeit dieses Nutzerprogramms und/oder dieser Industrieanlage zu visualisieren und eine mögliche Fehlfunktion in diesem Nutzerprogramm und/oder dieser Industrieanlage zu identifizieren.

2. Verfahren nach Anspruch 1, **dadurch gekennzeichnet, dass** die von der Zeitstempeleinheit (UH) dieses spezifischen Überwachungsmoduls (MSy) abgelesenen temporären Daten (Tj) der Echtzeit einer inneren Uhr dieses Steuergerätes (C), wenn es sich bei diesem spezifischen Überwachungsmodul um ein im "autonomen" oder im "Master-"Modus parametriertes Modul handelt, oder der von einem anderen spezifischen Überwachungsmodul abgelesenen Zeit entsprechen, wenn es sich bei diesem spezifischen Überwachungsmodul um ein im "Slave-"Modus parametriertes Modul handelt und es mit diesem anderen im "Master-"Modus parametrierten Modul verbunden ist.

3. Verfahren nach einem der vorstehenden Ansprüche, **dadurch gekennzeichnet, dass** diesem mindestens einen spezifischen Überwachungsmodul (MSy) eine Anzahl (n) zu überwachender Variablen (V1 bis Vn) zugeordnet wird, und dass die Leseeinheit (UL) dieses spezifischen Überwachungsmoduls (MSy) den Logikzustand jeder dieser überwachten Variablen (V1 bis Vn) in dieser augenblicklichen Zyklusumdrehung (TCi) abliest und in dieser globalen Speichereinheit (UM_G) dieses Steuergerätes (C) den Logikzustand aller in dieser augenblicklichen Zyklusumdrehung (TCi) überwachten Variablen (V1 bis Vn) aufzeichnet, wenn sich der Logikzustand mindestens einer dieser überwachten Variablen (V1 bis Vn) geändert hat.

4. Verfahren nach einem der vorstehenden Ansprüche, **dadurch gekennzeichnet, dass** mehrere spezifische Überwachungsmodule (MS1 bis MSt) an verschiedenen ausgewählten Positionen in diesem Nutzerprogramm des Steuergerätes (C) implantiert werden und dass jedem spezifischen Überwachungsmodul (MSy worin y zwischen 1 und t liegt) eine oder mehrere zu überwachende Variablen (V1 bis Vn) zugeordnet werden.

5. Verfahren nach Anspruch 1, **dadurch gekennzeichnet, dass** zur Analyse der mindestens einen, in der globalen Speichereinheit (UM_G) dieses Steuergerätes (C) aufgezeichneten Metainformation und zur Identifikation eines eventuellen Fehlers in diesem Nutzerprogramm und/oder dieser Industrieanlage, in diesem speziellen Beurteilungsgerät die mindestens eine Metainformation, die in der globalen Speichereinheit (UM_G) des genannten Steuergerätes (C) aufgezeichnet ist, aufgerufen wird und eine statische Analyse dieser mindestens einen Metainformation, offline und verzögert mittels eines speziellen Beurteilungsprogramms durchgeführt wird, oder dieses Beurteilungsgerät mit dem genannten Steuergerät (C) verbunden wird, um eine dynamische Analyse dieser mindestens einen Metainformation online, mittels des speziellen Beurteilungsprogramms durchzuführen.

6. Verfahren nach Anspruch 2, **dadurch gekennzeichnet, dass** durch eine Parametriereinheit (UP) der Betrieb dieses spezifischen Überwachungsmoduls (MSy) mittels mindestens eines Parameters parametriert wird, der aus der Gruppe mit mindestens einem "Betriebs"-modus, bei dem dieses spezifische Überwachungsmodul entweder manuell, über eine externe Steuerung, oder automatisch durch das genannte Nutzerprogramm aktiviert wird, mit einem "Halt"-modus, bei dem dieses spezifische Überwachungsmodul desaktiviert wird, mit einem "Initialisierungs-"Modus, in dem dieses spezifische Überwachungsmodul die den überwachten und in dieser globalen Speichereinheit (UM_G) des Steuergerätes (C) aufgezeichneten Variablen (V1 bis Vn) entsprechenden Metadaten auf Null setzt, mit dem "autonomen" Modus oder "Master-"Modus, in dem das spezifische Überwachungsmodul die Echtzeit der inneren Uhr dieses Steuergerätes (C) abliest, mit dem "Slave-"Modus ausgewählt wird, in dem dieses spezifische Überwachungsmodul die Zeit nutzt, die von einem anderen spezifischen Überwachungsmodul, das im "Master-"Modus parametriert ist.

7. Verfahren nach Anspruch 3, **dadurch gekennzeichnet, dass** mindestens eine der sogenannten vom spezifischen Überwachungsmodul (MSy) überwachten Variablen (V1 bis Vn) unterdrückt wird und dass der Logikzustand dieser mindestens einen unterdrückten Variablen nur dann aufgezeichnet wird, wenn sich der Logikzustand mindestens einer anderen, nicht unterdrückten Variablen ändert.

8. Verfahren nach einem der vorstehenden Ansprüche, **dadurch gekennzeichnet, dass** ein generisches Modul (MG) konzipiert wird, der für die Überwachung im genannten Nutzerprogramm dieses Steuergerätes (C) in Form eines einzigen Programmcodes bestimmt ist, das mindestens die genannten Lese- (UL), Steuerungs- (UC), Zeitstempel-(UH), Aufzeichnungs- (UE) und Parametrierungseinheiten (UP) enthält, und dadurch, dass jedes spezifische Überwachungsmodul (MSy) in Form eines ausführbaren Programmmoduls dieses für die Überwachung bestimmten generischen Moduls (MG), im genannten Nutzerprogramm implantiert ist.

9. Ausrüstung zur Überwachung und Beurteilung des Betriebs einer Industrieanlage, die von einem programmierbaren Steuergerät (C) anhand von Anweisungen angesteuert wird, die in einem Benutzerprogramm dieses Steuergerätes (C) programmiert werden, wobei dieses Nutzerprogramm interne Variablen enthält, die zur Koordinierung der Ausführung dieser Anweisungen bei jeder unendlich oft wiederholten Zyklusumdrehung (TCi) dieses Steuergerätes (C) verwendet werden, die den Betrieb mindestens eines Teils dieser Industrieanlage erlaubt, wobei die Ausrüstung **dadurch gekennzeichnet ist, dass** ein Überwachungs- und Beurteilungsverfahren nach einem der vorstehenden Ansprüche eingesetzt wird und sie zu diesem Zweck mindestens ein spezifisches Überwachungsmodul (MSy) enthält, das vorgesehen ist, um in diesem Nutzerprogramm des Steuergerätes (C) an mindestens einer ausgewählten Position implantiert zu werden, wobei dieses spezifische Überwachungsmodul (MSy) mindestens einen Eingang, dem mindestens eine interne, zu überwachende Variable (V1 bis Vn) zugeordnet wird, eine Leseeinheit (UL), die vorgesehen ist, um in Echtzeit den Logikzustand dieser mindestens einen überwachten Variablen (V1 bis Vn) zu lesen, wenn dieses spezifische Überwachungsmodul (MSy) während der Ausführung dieser Anweisungen während einer augenblicklichen Zyklusumdrehung (TCi) aktiviert wird, eine Steuereinheit (UC), die vorgesehen ist, um den Logikzustand dieser mindestens einen Variablen (V1 bis Vn) dieser augenblicklichen Zyklusumdrehung (TCi) mit dem zuvor registrierten Logikzustand derselben Variablen (V1 bis Vn) bei der vorherigen Zyklusumdrehung (TCi-1) zu vergleichen, eine Zeitstempeleinheit (UH), die zur Ablesung temporärer Daten (Tj) vorgesehen ist, die der augenblicklichen Zyklusumdrehung (TCi) entsprechen und eine Aufzeichnungseinheit (UE) enthält, die zur Aufzeichnung des neuen, abgelesenen Logikzustand dieser mindestens einen Variablen (V1 bis Vn) vorgesehen ist, der mit diesen temporären Daten (Tj) dieser augenblicklichen Zyklusumdrehung (TCi) verbunden ist, um nur bei einer Änderung dieses Logikzustandes mindestens eine Metainformation in dieser globalen Speichereinheit (UM_G) des Steuergerätes (C) zu bilden, und dadurch dass diese Ausrüstung außerdem ein spezielles Beurteilungsgerät enthält, das zur Analyse dieser mindestens einen Metainformation vorgesehen ist, die in dieser globalen Speichereinheit (UM_G) des Steuergerätes (C) aufgezeichnet ist, um den Betrieb in Echtzeit dieses Nutzerprogramms und/oder dieser Industrieanlage zu visualisieren und eine mögliche Fehlfunktion in diesem Nutzerprogramm und/oder dieser Industrieanlage zu identifizieren.

10. Ausrüstung nach Anspruch 9, **dadurch gekennzeichnet, dass** das genannte mindestens eine spezifische Überwachungsmodul (MSy) ein im "autonomen" oder im "Master-" Modus parametriertes Modul ist und die genannte Zeitstempeleinheit (UH) zum Ablesen der Echtzeit einer inneren Uhr dieses Steuergerätes (C) vorgesehen ist oder dass es im "Slave-" Modus parametriert ist und die genannte Zeitstempeleinheit (UH) zum Ablesen der Zeit (Tj) vorgesehen ist, die von einem anderen spezifischen Überwachungsmodul geliefert wird, das im "Master-" Modus parametriert ist.

11. Ausrüstung nach einem der Ansprüche 9 und 10, **dadurch gekennzeichnet, dass** dieses mindestens eine spezifische Überwachungsmodul (MSy) eine Anzahl (n) Eingänge enthält, denen eine Anzahl (n) zu überwachender Variablen (V1 bis Vn) zugeordnet wird, dadurch, dass die Leseeinheit (UL) dazu vorgesehen ist, um den Logikzustand jeder dieser überwachten Variablen (V1 bis Vn) in dieser augenblicklichen Zyklusumdrehung (TCi) abzulesen und dass die Aufzeichnungseinheit (UE) dafür vorgesehen ist, um in der genannten globalen Speichereinheit (UM_G) dieses Steuergerätes (C) den Logikzustand aller überwachten Variablen (V1 bis Vn) aufzuzeichnen, wenn sich der Logikzustand mindestens einer dieser überwachten Variablen geändert hat.

12. Ausrüstung nach einem der Ansprüche 9 bis 11, **dadurch gekennzeichnet, dass** mehrere Überwachungsmodule (MS1 bis MSt) an verschiedenen ausgewählten Positionen in diesem Nutzerprogramm implantiert sind und dass jedes spezifische Überwachungsmodul (MSy) einen oder mehrere Eingänge enthält, wobei eine zu überwachende Variable (V1 bis Vn) jedem Eingang zugeordnet ist.

13. Ausrüstung nach Anspruch 9, **dadurch gekennzeichnet, dass** dieses spezielle Beurteilungsgerät eine Speichereinheit, in der diese mindestens eine, in der globalen Speichereinheit (UM_G) dieses Steuergerätes (C) aufgezeichnete Metainformation aufgerufen wird, sowie ein Beurteilungsprogramm enthält, das zur Verarbeitung und Darstellung in graphischer Form dieser mindestens einen Metainformation vorgesehen ist, um den Betrieb in Echtzeit dieses Nutzerprogramms und/oder dieser Industrieanlage zu visualisieren, wobei dieses Beurteilungsgerät dafür vorgesehen ist, um eine statische Analyse dieser mindestens einen Metainformation offline und verzögert, oder eine dynamische Analyse dieser mindestens einen Metainformation online durchzuführen, wenn es mit dem genannten Steuergerät (C) verbunden ist.

14. Ausrüstung nach Anspruch 10, **dadurch gekennzeichnet, dass** dieses spezifische Überwachungsmodul (MSy) eine Parametriereinheit (UP) enthält, die dafür vorgesehen ist, ihren Betrieb mittels mindestens eines Parameters zu parametrieren, der aus der Gruppe mit mindestens einer "Betriebs"-Funktion, bei dem dieses spezifische Überwachungsmodul entweder manuell, über eine externe Steuerung, oder automatisch infolge von Bedingungen durch das genannte Nutzerprogramm aktiviert wird, mit einer "Halt"-Funktion, bei dem dieses spezifische Überwachungsmodul desaktiviert wird, mit einer "Initialisierungs-"Funktion, durch die dieses spezifische Überwachungsmodul in dieser globalen Speichereinheit (UM_G) des Steuergerätes (C) die aufgezeichnete, mindestens eine Metainformation, die der mindestens einen zu überwachenden Variablen (V1 bis Vn) entspricht, auf Null setzt, mit dem "autonomen" Modus oder "Master-"Modus, in dem das spezifische Überwachungsmodul die Echtzeit der inneren Uhr dieses Steuergerätes (C) abliest, mit dem "Slave-" Modus ausgewählt wird, in dem dieses spezifische Überwachungsmodul Zeit (Tj) nutzt, die von einem anderen spezifischen Überwachungsmodul, das im "Master-"Modus parametriert ist, gelesen wird.

15. Ausrüstung nach einem der Ansprüche 9 bis 14, **dadurch gekennzeichnet, dass** sie ein generisches Modul (MG) enthält, das zur Überwachung eines einzigen internen Programmcodes im genannten Nutzerprogramm dieses Steuergerätes (C) bestimmt ist und die mindestens die genannten Lese- (UL), Steuerungs- (UC), Zeitstempel- (UH), Parametrierungs- (UP) und Aufzeichnungseinheiten (UE) enthält, und dass jedes spezifische Überwachungsmodul (MS1 bis MSt), das in diesem Nutzerprogramm implantiert ist, ein ausführbares Programmmodul dieses generischen Moduls (MG) ist, das zur Überwachung im genannten Nutzerprogramm bestimmt ist.

## Claims

1. Method of monitoring and assessing an industrial installation driven by a programmable controller (C) by means of instructions programmed in a user program of said controller (C), said user program comprising internal variables for coordinating the execution of said instructions at every indefinitely repeated cycle turn (TCi) of said controller (C), allowing the operation of at least a section of said industrial installation., method **characterized in that** one implants at least one specific monitoring module (MSy) in the said user program of controller (C) at at least one chosen location, one assigns to said specific monitoring module (MSy) at least one internal variable (V1 to Vn) to be monitored, one implants said at least one specific monitoring module (MSy) after the writing of said at least one variable (V1 to Vn) to be monitored in said user program, and preferably immediately after its writing, said at least one variable (V1 to Vn) to be monitored being chosen in the group including the Boolean variables, the numerical variables, the complex variables of the character string type, and **in that**, during the execution of the instructions in an instantaneous cycle turn (TCi), said at least one specific monitoring module (MSy), when it is activated and executed by said user program, reads in real-time by means of a reading unit (UL) the logic state of said at least one variable (V1 to Vn) in said instantaneous cycle turn (TCi), compares by means of a control unit (UC) the logic state of said at least one variable (V1 to Vn) of said instantaneous cycle turn (TCi) with the previously recorded logic state of this same variable (V1 to Vn) of the previous cycle turn (TCi-1), and only in case of a change of said logic state, it reads by means of a time-stamping unit (UH) time data (Tj) corresponding to the instantaneous cycle turn (TCi) and records by a recording unit (UE) the new read logic state of said at least one variable (V1 to Vn) associated to the said time data (Tj) of said instantaneous cycle turn (TCi) forming at least one metadata in a global memory unit (UM_G) of controller (C), and **in that** one analyses with a dedicated assessment device the said at least one metadata recorded in said global memory unit (UM_G) of controller (C) to visualize in real-time the operation of said user program and/or of said industrial installation and identify a possible malfunction in said user program and/or in said industrial installation.

2. Method according to claim 1, **characterized in that** the time data (Tj) read by time-stamping unit (UH) of said specific monitoring module (MSy) correspond to the real time of an internal clock of said controller (C), when said specific monitoring module is a module parameterized in "autonomous" mode or in "master" mode, or to the time read by another specific monitoring module, when said specific monitoring module is a module parameterized in "slave" mode and is associated to this other specific monitoring module parameterized in "master" mode.

3. Method according to any of the previous claims, **characterized in that** one assigns to said at least one specific monitoring module (MSy) a number (n) of variables (V1 to Vn) to be monitored, and **in that** the reading unit (UL) of said specific monitoring module (MSy) reads the logic state of each of said variables (V1 to Vn) monitored in said instantaneous cycle turn (TCi) and records in said global memory unit (UM_G) of said controller (C) the logic state of all variables (V1 to Vn) monitored in said instantaneous cycle turn (TCi) if the logic state of at least one of said monitored variables (V1 to Vn) has changed.

4. Method according to any of the previous claims, **characterized in that** one implants several specific monitoring modules (MSI to MSt) at various locations chosen in said user program of controller (C), and one assigns to every specific monitoring module (MSy, where y is comprised between 1 and t) one or several variables (V1 to Vn) to be monitored.

5. Method according to claim 1, **characterized in that**, to analyze the said at least one metadata recorded in global memory unit (UM_G) of said controller (C) and identify a possible failure in said user program and/or in said industrial installation, one recovers in said dedicated assessment device the said at least one metadata recorded in global memory unit (UM_G) of said controller (C) and one performs a deferred static offline analysis of the said at least one metadata by means of a dedicated assessment software, or one connects said dedicated assessment device to said controller (C) to perform a dynamic online analysis of the said at least one metadata by means of said dedicated assessment software.

6. Method according to claim 2, **characterized in that** one parameterizes with a parameterizing unit (UP) the operation of said specific monitoring module (MSy) by means of at least one parameter chosen in the group including a "run" mode for which said specific monitoring module is activated either manually by an external control or automatically by said user program, a "stop" mode for which said specific monitoring module is de-activated, an "initialization" mode for which said specific monitoring module resets to zero the metadata corresponding to variables (V1 to Vn) monitored and recorded in said global memory unit (UM_G) of said controller (C), the "autonomous" mode or the "master" mode in which said specific monitoring module reads the real time of the internal clock of said controller (C), the "slave" mode in which said specific monitoring module uses the time read by another specific monitoring module parameterized in "master" mode.

7. Method according to any of claim 3, **characterized in that** one inhibits at least one of the variables (V1 à Vn) monitored by said specific monitoring module (MSy), and **in that** the logic state of said at least one inhibited variable will only be recorded when the logic state of at least one other non-inhibited variable will change.

8. Method according to any of the previous claims, **characterized in that** one designs a generic module (MG) dedicated to monitoring in said user program of said controller (C) in the form of a unique program code comprising at least said reading (UL), control (UC), time-stamping (UH), recording (UE) and parameterizing (UP) units, and **in that** one creates each specific monitoring module (MSy) in the form of an executable program module of said generic module (MG) dedicated to monitoring implanted in said user program.

9. Monitoring and assessment equipment of an industrial installation driven by a programmable controller (C) by means of instructions programmed in a user program of said controller, said user program comprising internal variables for coordinating the execution of said instructions at every indefinitely repeated cycle turn (TC) of said controller (C), allowing the operation of at least a section of said industrial installation, equipment **characterized in that** it implements the monitoring and assessment method according to any of the previous claims and comprises to this purpose at least one specific monitoring module (MSy) arranged to be implanted at at least one location chosen in the said user program of controller (C), said specific monitoring module (MSy) comprising at least one input to which at least one internal variable (V1 to Vn) to be monitored is assigned, a reading unit (UL) arranged to read in real-time the logic state of the said at least one variable (V1 to Vn) when said at least one specific monitoring module (MSy) is activated during the execution of said instructions in an instantaneous cycle turn (TCi), a control unit (UC) arranged to compare the logic state of the said at least one variable (V1 to Vn) of said instantaneous cycle turn (TCi) with the previously recorded logic state of the same variable (V1 to Vn) of the previous cycle turn (TCi-1), a time-stamping unit (UH) arranged to read time data (Tj) corresponding to said instantaneous cycle turn (TCi), and a recording unit (UE) arranged to record the new read logic state of the said at least one variable (V1 to Vn) associated to said time data (Tj) of said instantaneous cycle turn (TCi) to form at least one metadata in a global memory unit (UM_G) of said controller (C) only in case of a change of said logic state, and **in that** said equipment moreover comprises a dedicated assessment device arranged to analyze the said at least one metadata recorded in said global memory unit (UM_G) of said controller (C), visualize in real-time the operation of said user program and/or of said industrial installation, and identify a possible malfunction in said user program and/or in said industrial installation.

10. Equipment according to claim 9, **characterized in that** said at least one specific monitoring module (MSy) is a module parameterized in "autonomous" mode or in "master" mode and said time-stamping unit (UH) is arranged to read the real time (Tj) of an internal clock of said controller (C), or in "slave" mode and said time-stamping unit (UH) is arranged to read the time (Tj) provided by another specific monitoring module parameterized in "master" mode.

11. Equipment according to any of claims 9 and 10, **characterized in that** said at least one specific monitoring module (MSy) comprises a number (n) of inputs to which a number (n) of variables (V1 to Vn) to be monitored is assigned, **in that** said reading unit (UL) is arranged to read the logic state of each of said variables (V1 to Vn) in said instantaneous cycle turn (TCi) and **in that** the recording unit (UE) is arranged to record in said global memory unit (UM_G) of said controller (C) the logic state of all variables (V1 to Vn) if the logic state of at least one of said monitored variables has changed.

12. Equipment according to any of claims 9 to 11, **characterized in that** it comprises several monitoring modules (MSI to MSt) implanted at various locations chosen in said user program, and **in that** every specific monitoring module (MSy) comprises one or several inputs, a variable (V1 to Vn) to be monitored being assigned to each input.

13. Equipment according to claim 9, **characterized in that** said dedicated assessment device comprises a memory unit in which the said at least one metadata recorded in global memory unit (UM_G) of said controller (C) is recovered, as well as a dedicated assessment software arranged to process and represent in a graphic form the said at least one metadata in order to visualize in real-time the operation of said user program and/or of said industrial installation, said dedicated assessment device being arranged to perform a deferred static offline analysis of the said at least one metadata or a dynamic online analysis of the said at least one metadata when it is connected to said controller (C).

14. Equipment according to claim 10, **characterized in that** said specific monitoring module (MSy) comprises a parameterizing unit (UP) arranged to parameterize its operation by means of at least one parameter chosen in the group of parameters including a "run" function for which said specific monitoring module is activated either manually by an external control or automatically, depending on conditions, by said user program, a "stop" function for which said specific monitoring module is de-activated, an "initialization" function for which said specific monitoring module resets to zero in said global memory unit (UM_G) of said controller (C) the said at least one recorded metadata corresponding to monitored the said at least one variables (V1 to Vn), the "autonomous" mode or the "master" mode in which said specific monitoring module reads the real time of the internal clock of said controller (C), the "slave" mode in which said specific monitoring module uses the time (Tj) read by another specific monitoring module parameterized in "master" mode.

15. Equipment according to any of claims 9 to 14, **characterized in that** it comprises a generic module (MG) dedicated to monitoring made of a unique program code inside of said user program of said controller (C) and comprising at least said reading (UL), control (UC), time-stamping (UH), parameterizing (UP) and recording (UE) units, and **in that** each specific monitoring module (MS1 to MSt) implanted in said user program is an executable program module of said generic module (MG) dedicated to monitoring.
